(19) 

**Europäisches Patentamt**
**European Patent Office**
**Office européen des brevets**

(11) **EP 4 586 206 A1**

(12) **EUROPEAN PATENT APPLICATION**
published in accordance with Art. 153(4) EPC

(43) Date of publication:
**16.07.2025 Bulletin 2025/29**

(21) Application number: **23862911.7**

(22) Date of filing: **21.08.2023**

(51) International Patent Classification (IPC):
**G06T 19/00** (2011.01)    **G06T 15/04** (2011.01)

(52) Cooperative Patent Classification (CPC):
**G06T 15/04; G06T 15/20; G06T 17/00; G06T 19/00**

(86) International application number:
**PCT/JP2023/029936**

(87) International publication number:
**WO 2024/053371 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.09.2022 JP 2022141383**

(71) Applicant: **Sony Group Corporation**
**Tokyo 108-0075 (JP)**

(72) Inventor: **IZUMI Nobuaki**
**Tokyo 108-0075 (JP)**

(74) Representative: **D Young & Co LLP**
**3 Noble Street**
**London EC2V 7BQ (GB)**

(54) **INFORMATION PROCESSING SYSTEM, METHOD FOR ACTUATING INFORMATION PROCESSING SYSTEM, AND PROGRAM**

(57) The present disclosure relates to an information processing system, an operation method of the information processing system, and a program capable of implementing drawing and reproduction of an optimal virtual viewpoint image in reproduction devices having various performances.

Three-dimensional shape data with UV coordinates is generated by setting coordinates on a packing texture generated by extracting and packing a region of a subject from camera images captured by a plurality of cameras corresponding to three-dimensional shape data as UV coordinates, and adding information of the UV coordinates in association with the three-dimensional shape data. In rendering, on the basis of the three-dimensional shape data with UV coordinates, for a pixel to be drawn, in a case where there is a pixel appearing in a camera image close to the viewpoint direction, drawing is performed by view dependent drawing processing, and otherwise, drawing is performed by UV map drawing processing. The present disclosure can be applied to a reproduction device of a virtual viewpoint image.

*FIG. 14*

EP 4 586 206 A1

**Description**

TECHNICAL FIELD

The present disclosure relates to an information processing system, an operation method of the information processing system, and a program, and more particularly relates to an information processing system, an operation method of the information processing system, and a program capable of implementing reproduction of an optimal virtual viewpoint image (free viewpoint image and volumetric image) in reproduction devices having various performances.

BACKGROUND ART

There has been proposed a technique for generating a virtual viewpoint (free viewpoint and volumetric) image by combining images captured using a large number of cameras.
For example, a technique for generating a birdview video on the basis of a plurality of viewpoint images captured from a plurality of viewpoints or a plurality of viewpoint images which are computer graphics (CG) images from a plurality of viewpoints has been proposed (see Patent Document 1).

CITATION LIST

PATENT DOCUMENT

Patent Document 1: WO 2018/150933 A1

SUMMARY OF THE INVENTION

PROBLEMS TO BE SOLVED BY THE INVENTION

However, in the technique of Patent Document 1, although it is possible to perform drawing using image data suitable for a drawing viewpoint by using images captured from a plurality of viewpoints, the drawing processing has a large processing load, and there is a limitation on a reproduction device capable of drawing and reproducing according to performance.
The present disclosure has been made in view of such a situation, and particularly, an object of the present disclosure is to enable implementation of drawing and reproduction of an optimal virtual viewpoint image in reproduction devices having various performances.

SOLUTIONS TO PROBLEMS

An information processing system and a program according to one aspect of the present disclosure are an information processing system and a program including a texture coordinate generation unit that generates three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on the basis of the three-dimensional shape data, a camera parameter, and color information texture data which are used when generating a virtual viewpoint image from the camera images, and adding information of the texture coordinates in association with the three-dimensional shape data.
An operation method of an information processing system according to one aspect of the present disclosure is an operation method of an information processing including generating three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on the basis of the three-dimensional shape data, a camera parameter, and color information texture data which are used when generating a virtual viewpoint image from the camera images, and adding information of the texture coordinates in association with the three-dimensional shape data.
In one aspect of the present disclosure, three-dimensional shape data with texture coordinates is generated by imaging a subject with a plurality of cameras, setting coordinates on a packing texture generated from a plurality of camera images captured by the plurality of cameras corresponding to the three-dimensional shape data as texture coordinates on the basis of the three-dimensional shape data, a camera parameter, and color information texture data which are used when generating a virtual viewpoint image from the camera images, and adding information of the texture coordinates in association with the three-dimensional shape data.

EP 4 586 206 A1

BRIEF DESCRIPTION OF DRAWINGS

Fig. 1 is a diagram illustrating a configuration example of an image processing system that generates a volumetric image.
Fig. 2 is a diagram illustrating a process of generating a volumetric image.
Fig. 3 is a diagram illustrating rendering based on view independent and view dependent vertices.
Fig. 4 is a diagram illustrating an example of a data structure necessary for view dependent rendering.
Fig. 5 is a diagram illustrating an example of a data structure necessary for view independent rendering.
Fig. 6 is a diagram illustrating an example of a data structure necessary for rendering of the present disclosure.
Fig. 7 is a diagram illustrating an outline of an information processing system to which the technology of the present disclosure is applied.
Fig. 8 is a diagram illustrating generation of a multi-view imaging system used to generate a virtual viewpoint image in the information processing system to which the technology of the present disclosure is applied.
Fig. 9 is a flowchart illustrating virtual viewpoint image display processing by the information processing system in Fig. 7.
Fig. 10 is a diagram illustrating a detailed configuration example of an encoding unit in Fig. 6.
Fig. 11 is a diagram illustrating that three-dimensional shape data is surface data of an object to be a subject formed by a large number of triangular patches.
Fig. 12 is a diagram illustrating an example of a data structure of three-dimensional shape data.
Fig. 13 is a diagram illustrating color information texture data.
Fig. 14 is a diagram illustrating an example of a data structure of three-dimensional shape data with UV coordinates.
Fig. 15 is a diagram illustrating an example of a packing texture.
Fig. 16 is a diagram illustrating image arrangement information.
Fig. 17 is a diagram illustrating visibility check.
Fig. 18 is a flowchart illustrating encoding processing by the encoding unit illustrated in Fig. 10.
Fig. 19 is a flowchart illustrating UV coordinate generation processing by the UV coordinate generation unit in Fig. 10.
Fig. 20 is a diagram illustrating a detailed configuration example of a decoding unit in Fig. 6.
Fig. 21 is a flowchart illustrating a decoding operation by the decoding unit illustrated in Fig. 20.
Fig. 22 is a diagram illustrating a detailed configuration example of a rendering unit in Fig. 6.
Fig. 23 is a flowchart illustrating rendering processing by the rendering unit in Fig. 22.
Fig. 24 illustrates a configuration example of a general-purpose computer.

MODE FOR CARRYING OUT THE INVENTION

Hereinafter, a preferred embodiment of the present disclosure will be described in detail with reference to the accompanying drawings. Note that, in the present specification and drawings, components having substantially the same functional configuration are denoted by the same reference signs, and redundant description is omitted.

Hereinafter, modes for carrying out the technology of the present disclosure will be described. The description will be given in the following order.

1. Outline of Present Disclosure
2. Preferred Embodiment
3. Example of Execution by Software
4. Application Examples

<<1. Outline of Present Disclosure>>

<Generation of Virtual Viewpoint Image>

In particular, the present disclosure makes it possible to implement drawing and reproduction of an optimal virtual viewpoint image (free viewpoint image and volumetric image) in reproduction devices having various performances.

Therefore, in describing the technology of the present disclosure, a configuration for generating a virtual viewpoint image and a generation process will be briefly described.

Generation of a virtual viewpoint image requires images obtained by capturing a subject from a plurality of viewpoint positions.

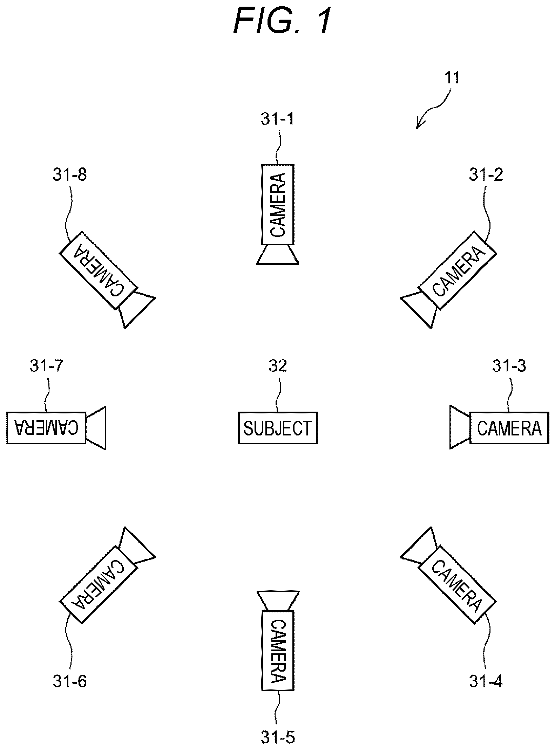

Thus, in generating the virtual viewpoint image, an information processing system as illustrated in Fig. 1 is used.

The information processing system 11 in Fig. 1 is provided with a plurality of cameras 31-1 to 31-8 that can capture images of a subject 32 from many viewpoint positions.

Note that although Fig. 1 illustrates an example in which the number of cameras 31 is eight, a plurality of other cameras may be used. Furthermore, Fig. 1 illustrates an example in which the cameras 31-1 to 31-8 at eight viewpoint positions are provided so as to two-dimensionally surround the subject 32, but more cameras 31 may be provided so as to three-dimensionally surround the subject.

Hereinafter, in a case where it is not necessary to particularly distinguish the cameras 31-1 to 31-8, they are simply referred to as the camera 31, and the other configurations are also similarly referred to.

The cameras 31-1 to 31-8 capture images from a plurality of different viewpoint positions with respect to the subject 32.

Note that, hereinafter, images from a plurality of different viewpoint positions of the subject 32 captured by the plurality of cameras 31 are also collectively referred to as a multi-viewpoint image.

The virtual viewpoint image is generated by rendering at a virtual viewpoint position from the multi-viewpoint image captured by the information processing system 11 in Fig. 1. In generating the virtual viewpoint image, three-dimensional data of the subject 32 is generated from the multi-viewpoint image, and a virtual viewpoint image (rendered image) is generated by rendering processing of the subject 32 at the virtual viewpoint position on the basis of the generated three-dimensional data.

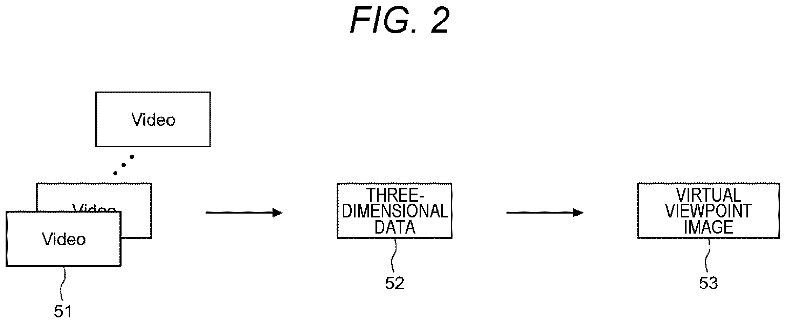

That is, as illustrated in Fig. 2, three-dimensional data 52 of the subject 32 is generated on the basis of a multi-viewpoint image 51 of the subject 32.

Then, the rendering processing at the virtual viewpoint position is performed on the basis of the three-dimensional data 52 of the subject 32, and the virtual viewpoint image 53 is generated.

<Rendering>

Next, rendering for generating the virtual viewpoint image 53 at the virtual viewpoint position will be described by taking as an example a case where color is applied on the basis of a predetermined vertex in the subject 32.

Rendering includes view independent rendering that is independent of a viewpoint and view dependent rendering that is dependent of a viewpoint position.

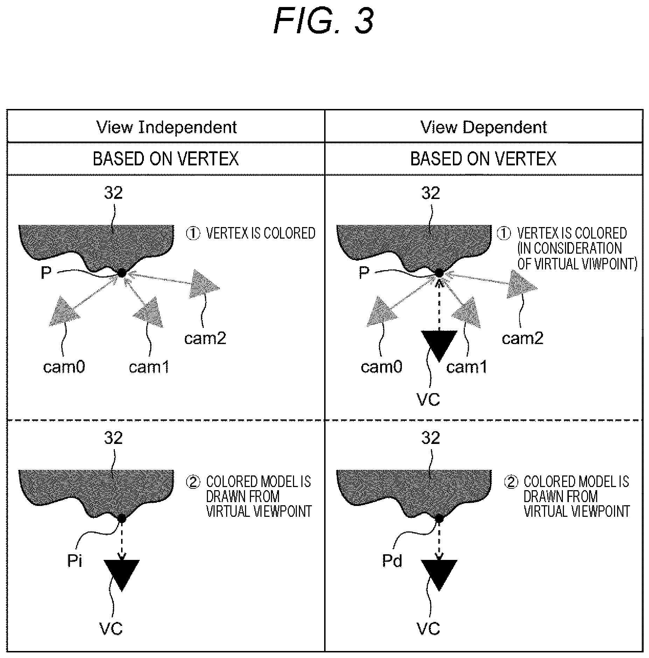

In a case where color is applied to a vertex P on the subject 32 from the virtual viewpoint position by the view independent rendering on the basis of multi-viewpoint images of viewpoint positions cam0 to cam2 of the subject 32, the color is applied as illustrated in the left part of Fig. 3.

That is, as illustrated in the upper left part of Fig. 3, pixel values corresponding to the vertex P of the multi-viewpoint image of the viewpoint positions cam0 to cam2 are combined in consideration of angles formed by line-of-sight directions with respect to the vertex P at the respective viewpoint positions cam0 to cam2 and a normal direction at the vertex P, and are set as a pixel value $Pi$ viewed from a virtual viewpoint VC as illustrated in the lower left part of Fig. 3. Note that the view independent rendering is rendering generally known as UV mapping, for example.

On the other hand, in a case where color is applied to the vertex P on the subject 32 from the virtual viewpoint position by the view dependent rendering on the basis of the multi-viewpoint images of the viewpoint positions cam0 to cam2 of the subject 32, the color is applied as illustrated in the right part of Fig. 3.

That is, as illustrated in the upper right part of Fig. 3, pixel values corresponding to the vertex P of the multi-viewpoint images of the viewpoint positions cam0 to cam2 are combined in consideration of an angle formed by a line-of-sight direction from the virtual viewpoint VC and the normal direction of the vertex P in addition to the information of the angles formed by the line-of-sight directions with respect to the vertex P at the respective viewpoint positions cam0 to cam2 and the normal direction at the vertex P, and are set as a pixel value $Pd$ viewed from the virtual viewpoint VC as illustrated in the lower right part of Fig. 3.

As illustrated in Fig. 3, in the view dependent rendering, when color is applied to the vertex P in the view independent rendering, the color is applied in consideration of the angle formed by the line-of-sight direction from the virtual viewpoint and the normal direction at the vertex P, so that a more natural color can be applied.

<Data Structure Necessary for View Dependent Rendering>

Next, a data structure necessary for the view dependent rendering will be described.

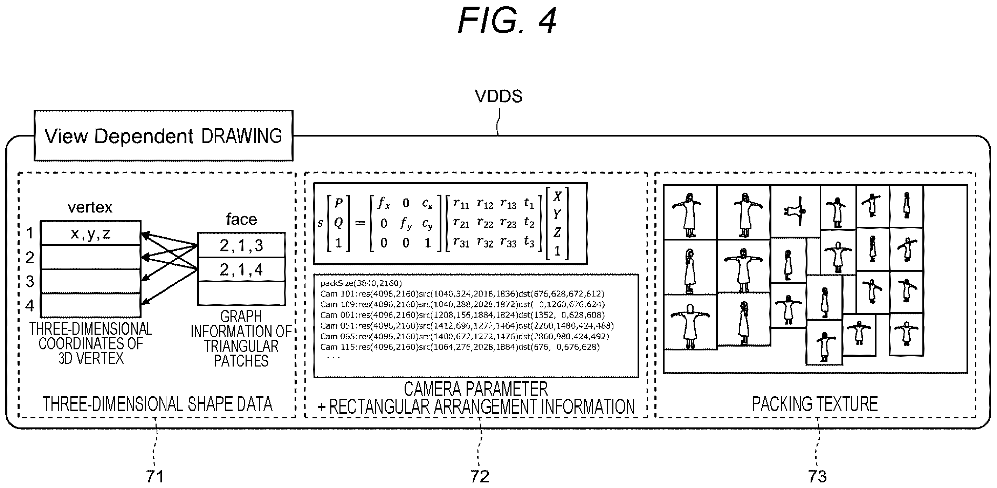

A data structure VDDS necessary for the view dependent rendering includes three-dimensional shape data 71, camera parameter + rectangular arrangement information 72, and a packing texture 73, as illustrated in Fig. 4.

The three-dimensional shape data 71 is information indicating a correspondence relationship between coordinates of vertex positions of a subject represented by a three-dimensional mesh and respective vertex positions of triangular patches forming a surface of the subject on the three-dimensional mesh.

The camera parameter + rectangular arrangement information 72 is a camera parameter indicating a relationship between a three-dimensional position and a coordinate position in an image captured by each camera 31, and arrangement coordinate information of a rectangular image including the subject among images captured by the plurality of cameras 31 packed in the packing texture 73.

The packing texture 73 is texture information of the subject formed by packing an image (texture) obtained by clipping the rectangular range including the subject among images captured by the plurality of cameras 31.

That is, in the view dependent rendering, positions of three vertices of triangular patches constituting a three-dimensional model of the subject of coordinate positions of respective vertices constituting the three-dimensional model of the subject are specified on the basis of the three-dimensional shape data.

Then, by using the camera parameter according to the viewpoint position, the coordinate position in the image is specified on the basis of the three vertexes of each triangular patch, the arrangement coordinates of each rectangular image in the packing texture are specified on the basis of the rectangular arrangement information, and the texture at the specified coordinate position in the image is used for each rectangular image of the specified arrangement coordinates, thereby implementing rendering.

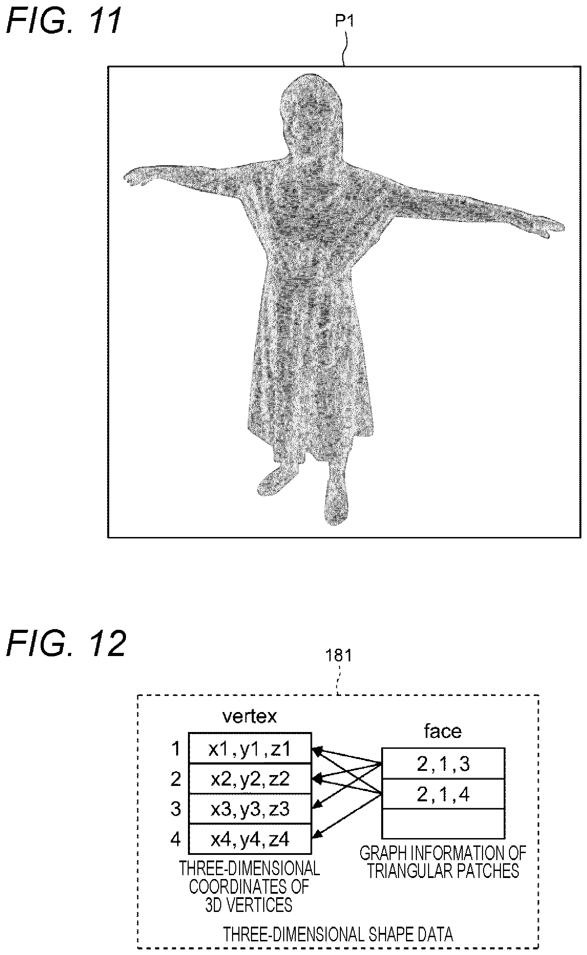

Note that the three-dimensional shape data 71, the camera parameter + rectangular arrangement information 72, and the packing texture 73 will be described later in detail with reference to Figs. 12, 16, and 15.

<Data Structure Necessary for View Independent Rendering>

Next, a data structure necessary for the view independent rendering will be described.

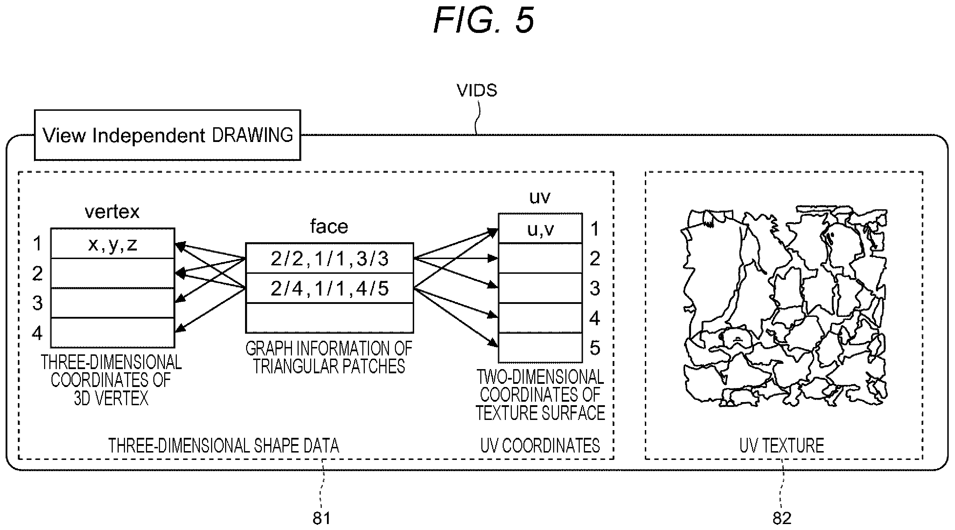

The data structure VIDS necessary for the view independent rendering includes three-dimensional shape data + UV coordinates 81 and UV texture 82, as illustrated in Fig. 5.

The three-dimensional shape data + UV coordinates 81 includes, in addition to the three-dimensional shape data 71 described above, information of UV coordinates in the UV texture 82 corresponding to each of the three vertices of the triangular patch of the three-dimensional shape data 71.

The UV texture 82 is a map on which a texture is arranged by two-dimensionally developing a three-dimensional mesh of a subject.

That is, the view independent rendering is substantially the UV mapping itself, and specifies the positions of the three vertices of the triangular patch from the three-dimensional shape data on the basis of the three-dimensional shape data + UV coordinates 81, further specifies the UV coordinates on the UV texture 82 of each of the three vertices, and performs rendering using the specified texture.

As described above, in the viewpoint dependent rendering, the UV texture is not provided, and when the vertex positions of the triangular patches constituting the subject are specified on the basis of the three-dimensional shape data 71, the rendering is implemented using the texture on the packing texture 73 for each viewpoint position using the camera parameters.

Thus, in the view dependent rendering, color reproduction with high accuracy can be implemented, but since the processing load is large, usable reproduction devices are limited according to performance.

On the other hand, the view independent rendering is substantially the UV mapping itself, and when the vertex positions of the triangular patches constituting the subject are specified on the basis of the three-dimensional shape data + UV coordinates 81, the coordinate positions on the corresponding UV texture 82 are specified, and the texture at the coordinate positions is only read and used.

Thus, in the view independent rendering, distortion may occur due to two-dimensional development of the UV texture 82 from the three-dimensional mesh and appropriate color reproduction may not be possible, but since the processing load is small, reproduction can be performed in most reproduction devices.

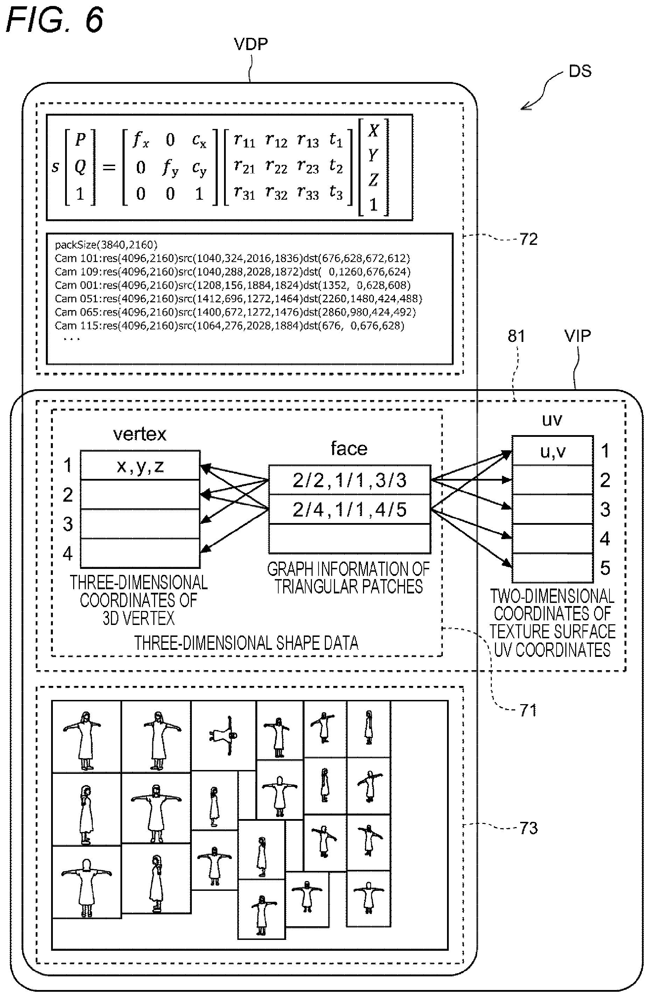

Therefore, in the data structure used for rendering of the present disclosure, as illustrated in Fig. **6,** the information of the UV coordinates in the data structure of the view independent rendering is added on the basis of the data structure of the view dependent rendering, so that the view dependent rendering and the view in dependent rendering can be switched and used according to the processing load of the reproduction device.

Thus, it is possible to eliminate the limitation according to the performance of the reproduction device and to switch between the view dependent rendering and the view independent rendering according to the processing load of the reproduction device to reproduce the virtual viewpoint image.

As a result, drawing and reproduction of an optimal virtual viewpoint image can be implemented in reproduction devices having various performances.

Note that the data structure DS of the present disclosure in Fig. 6 includes a view dependent rendering part VDP used in the view dependent rendering, and a view independent rendering part VIP used in the view independent rendering, and the view dependent rendering part VDP and the view independent rendering part VIP share a part with each other.

The view dependent rendering part VDP is the data structure VDDS itself necessary for the view dependent rendering described with reference to Fig. 4.

Furthermore, the view independent rendering part VIP includes three-dimensional shape data + UV coordinates 81 obtained by adding UV coordinate information to the three-dimensional shape data 71, and the packing texture 73.

That is, in the view independent rendering part VIP, the UV texture 82 is not provided in the data structure VIDS necessary for the view independent rendering described with reference to Fig. 5, and the packing texture 73 is provided instead.

In the view independent rendering part VIP, since both the packing texture 73 and the UV texture 82 store texture information, the texture information of the packing texture 73 is used instead of the UV texture 82 in the data structure DS of Fig. 6.

Thus, the information of the UV coordinates (two-dimensional coordinates of the texture surface) in the three-dimensional shape data + UV coordinates 81 is information of the coordinate position on the packing texture 73.

From such a configuration, the data structure DS in Fig. 6 is based on the data structure VDDS necessary for the viewpoint dependent rendering described with reference to Fig. 4, and has a structure in which information of UV coordinates (two-dimensional coordinates of the texture surface) in the three-dimensional shape data + UV coordinates 81 are added.

<<2. Preferred Embodiment>>

<Outline of Information Processing System of Present Disclosure>

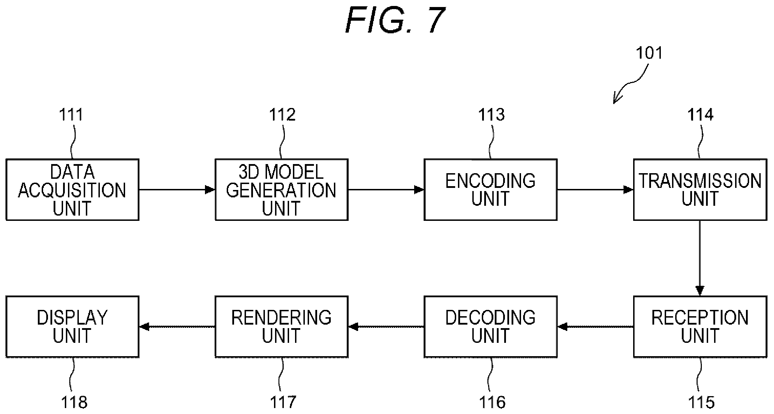

Fig. 7 illustrates an outline of an information processing system to which the technology of the present disclosure is applied.

An information processing system 101 in Fig. 7 includes a data acquisition unit 111, a 3D model generation unit 112, an encoding unit 113, a transmission unit 114, a reception unit 115, a decoding unit 116, a rendering unit 117, and a display unit 118.

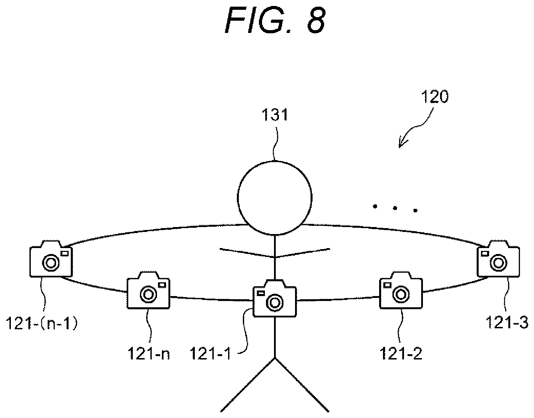

The data acquisition unit 111 acquires image data for generating a 3D model of a subject. For example, as illustrated in Fig. 8, a plurality of viewpoint images captured by a multi-viewpoint imaging system 120 including a plurality of cameras 121-1 to 121-n arranged so as to surround a subject 131 are acquired as image data.

Note that, hereinafter, in a case where it is not necessary to particularly distinguish the cameras 121-1 to 121-n, the cameras are simply referred to as a camera 121, and other configurations are similarly referred to. Furthermore, the plurality of viewpoint images is also referred to as multi-viewpoint images.

In this case, the plurality of viewpoint images is preferably images captured by the plurality of cameras 121 in synchronization.

Furthermore, the data acquisition unit 111 may acquire, for example, image data obtained by imaging the subject from a plurality of viewpoints by moving one camera 121.

Moreover, the data acquisition unit 111 may acquire one captured image of the subject as image data using machine learning by a 3D model generation unit 112 described later.

Furthermore, the data acquisition unit 111 may perform calibration on the basis of the image data and acquire internal parameters and external parameters of each camera 121. Note that the camera parameters to be described later are configured by combining internal parameters and external parameters of the camera 121, and details thereof will be described later.

Moreover, the data acquisition unit 111 may acquire, for example, a plurality of pieces of depth information (depth maps) indicating distances from viewpoints at a plurality of positions to the subject.

The 3D model generation unit 112 generates a model having three-dimensional information of the subject 131 on the basis of image data for generating a 3D model of the subject 131.

The 3D model generation unit 112 generates the 3D model of the subject by, for example, scraping the three-dimensional shape of the subject using images from a plurality of viewpoints (for example, silhouette images from the plurality of viewpoints) using what is called a visual hull.

In this case, the 3D model generation unit 112 can further deform the 3D model generated using the visual hull with high accuracy using the plurality of pieces of depth information indicating distances from the viewpoints at a plurality of positions to the subject.

Furthermore, for example, the 3D model generation unit 112 may generate the 3D model of the subject 131 from one captured image of the subject 131.

The 3D model generated by the 3D model generation unit 112 can also be referred to as a moving image of the 3D model by generating the 3D model in time series frame units.

Furthermore, since the 3D model is generated using an image captured by the camera 121, the 3D model can also be referred to as a live-action 3D model.

The 3D model can represent shape information representing a surface shape of the subject 131 in the form of, for example, mesh data represented by connection between a vertex and a vertex, which is referred to as a polygon mesh. Note that, hereinafter, the shape information representing the surface shape of the subject 131 representing the 3D model is also referred to as three-dimensional shape data.

The method of representing the 3D model is not limited thereto, and the 3D model may be described by what is called a point cloud representation method that represents the 3D model by position information about points.

Data of color information is also generated as a texture in association with the 3D shape data. For example, there are a case of a view independent texture in which colors are constant when viewed from any direction and a case of a view dependent texture in which colors change depending on a viewing direction. Note that, hereinafter, the texture that is the data of color information is also referred to as color information texture data.

The encoding unit 113 converts the data of the 3D model generated by the 3D model generation unit 112 into a format suitable for transmission and accumulation.

The transmission unit 114 transmits transmission data formed by the encoding unit 113 to the reception unit 115. The transmission unit 114 performs a series of processing of the data acquisition unit 111, the 3D model generation unit 112, and the encoding unit 113 offline, and then transmits the transmission data to the reception unit 115.

Furthermore, the transmission unit 114 may transmit transmission data generated from the series of processing described above to the reception unit 115 in real time.

The reception unit 115 receives the transmission data transmitted from the transmission unit 114 and outputs the transmission data to the decoding unit 116.

The decoding unit 116 restores the bit stream received by the reception unit to a two-dimensional image, restores the image data to a mesh and texture information that can be drawn by the rendering unit 117, and outputs the mesh and texture information to the rendering unit 117.

The rendering unit 117 projects the mesh of the 3D model as an image of a viewpoint position to be drawn, performs texture mapping of pasting a texture representing a color or a pattern, and outputs the mesh to the display unit 118 for display. A feature of this system is that the drawing at this time can be arbitrarily set and viewed from a free viewpoint regardless of the viewpoint position of the camera 121 at the time of imaging. Hereinafter, an image of arbitrarily settable viewpoint is also referred to as a virtual viewpoint image or a free viewpoint image.

The texture mapping includes what is called a view dependent method in which the viewing viewpoint of a user is considered and a view independent method in which the viewing viewpoint of a user is not considered.

Since the view dependent method changes the texture to be pasted on the 3D model according to the position of the viewing viewpoint, there is an advantage that rendering of higher quality can be achieved than by the view independent method.

On the other hand, the view independent method does not consider the position of the viewing viewpoint, and thus there is an advantage that the processing amount is reduced as compared with the view dependent method.

Note that a display device detects a viewing point (region of interest) of the user, and the viewing viewpoint data is input from the display device to the rendering unit 117.

The display unit 118 displays a result of rendering by the rendering unit 117 on the display surface of the display device. The display device may be, for example, a 2D monitor or a 3D monitor, such as a head mounted display, a spatial display, a mobile phone, a television, or a personal computer (PC).

The information processing system 101 in Fig. 7 illustrates a series of flow from the data acquisition unit 111 that acquires a captured image that is a material for generating content to the display unit 118 that controls the display device viewed by the user.

However, not meaning that all functional blocks are necessary for implementation of the present disclosure, the present disclosure can be implemented for each functional block or a combination of a plurality of functional blocks.

For example, the information processing system 101 in Fig. 7 is provided with the transmission unit 114 and the reception unit 115 in order to illustrate a series of flow from the side of creating the content to the side of viewing the content through the distribution of content data, but in a case where the processing from creation to viewing of the content is performed by the same information processing device (for example, a personal computer), it is not necessary to include the encoding unit 113, the transmission unit 114, the decoding unit 116, or the reception unit 115.

When the information processing system 101 in Fig. 7 is implemented, the same implementer may implement all the processes, or different implementers may implement each functional block.

As an example, a company A generates 3D content through the data acquisition unit 111, the 3D model generation unit 112, and the encoding unit 113. Then, it is conceivable that the 3D content is distributed through the transmission unit (platform) 114 of a company B, and the display unit 118 of a company C performs reception, rendering, and display control of the 3D content.

Furthermore, each functional block can be implemented on a cloud. For example, the rendering unit 117 may be implemented in a display device or may be implemented in a server. In this case, information is exchanged between the display device and the server.

In Fig. 7, the data acquisition unit 111, the 3D model generation unit 112, the encoding unit 113, the transmission unit 114, the reception unit 115, the decoding unit 116, the rendering unit 117, and the display unit 118 are collectively described as the information processing system 101.

However, the information processing system 101 of the present specification is referred to as the information processing system 101 when two or more functional blocks are related, and for example, the data acquisition unit 111, the 3D model generation unit 112, the encoding unit 113, the transmission unit 114, the reception unit 115, the decoding unit 116, and the rendering unit 117 can be collectively referred to as the information processing system 101 without including the display unit 118.

<Virtual Viewpoint Image Display Processing>

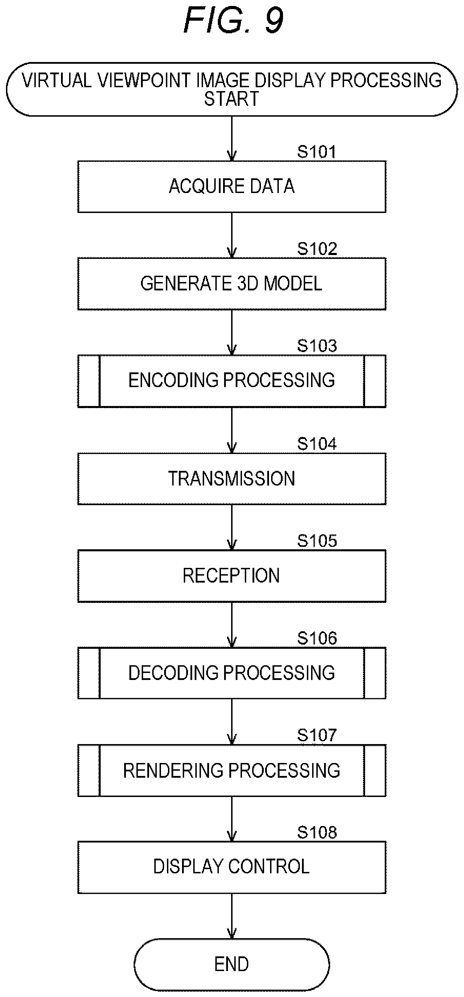

Next, an example of a flow of virtual viewpoint image display processing by the information processing system 101 in Fig. 7 will be described with reference to a flowchart in Fig. 9.

In step S101, the data acquisition unit 111 acquires image data for generating the 3D model of the subject 131, and outputs the image data to the 3D model generation unit 112.

In step S102, the 3D model generation unit 112 generates a model having three-dimensional information of the subject 131 on the basis of image data for generating a 3D model of the subject 131, and outputs the model to the encoding unit 113.

In step S103, the encoding unit 113 executes encoding processing to be described later, encodes shape and texture data of the 3D model generated by the 3D model generation unit 112 into a format suitable for transmission and accumulation, and outputs the encoded data to the transmission unit 114.

In step 104, the transmission unit 114 transmits the encoded data.

In step 105, the reception unit 115 receives the transmitted data and outputs the data to the decoding unit 116.

In step 106, the decoding unit 116 performs decoding processing to be described later, converts the data into shape and texture data necessary for display, and outputs the data to the rendering unit 117.

In step 107, the rendering unit 117 executes rendering processing to be described later, renders the virtual viewpoint image using the shape and texture data of the 3D model, and outputs the virtual viewpoint image as a rendering result to the display unit 118.

In step 108, the display unit 118 displays the virtual viewpoint image that is the rendering result.

When the processing in step S108 ends, the virtual viewpoint image display processing by the information processing system 101 ends.

<Encoding Unit>

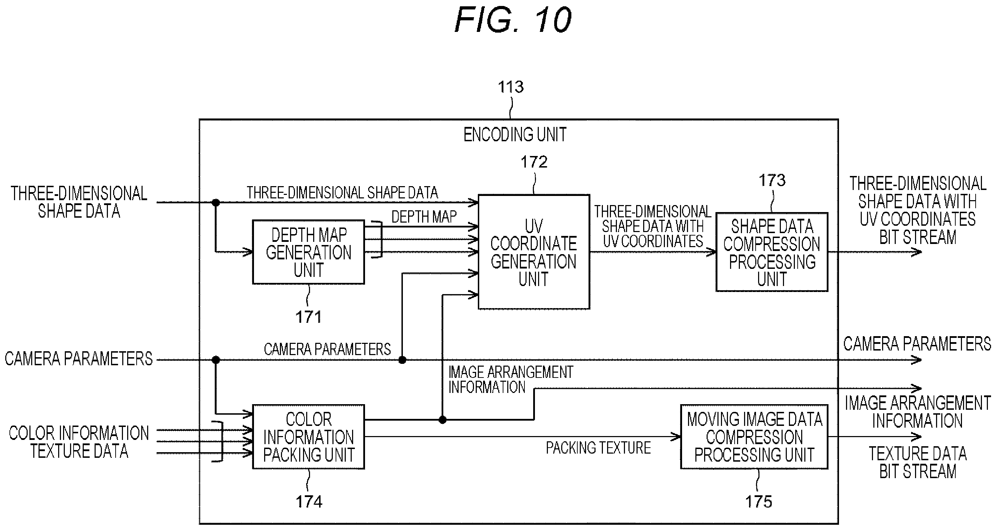

Next, a detailed configuration of the encoding unit 113 will be described with reference to Fig. 10.

The encoding unit 113 generates and outputs a three-dimensional shape data bit stream with UV coordinates, a texture data bit stream, a camera parameter, and image arrangement information on the basis of the three-dimensional shape data, the color information texture data, and the camera parameter supplied from the 3D model generation unit 112. Note that the camera parameters are output as they are.

Here, the three-dimensional shape data is, for example, surface data of an object to be a subject formed by a large number of triangular patches as illustrated in an image P1 of Fig. 11.

Note that Fig. 11 illustrates an example in which a woman wearing a skirt standing with her hands outstretched is the subject, and illustrates a state in which a surface portion of the woman is covered with a triangular patch on the basis of three-dimensional shape data.

The data structure of the three-dimensional shape data corresponds to the three-dimensional shape data of Fig. 4, and is, for example, three-dimensional shape data 181 of Fig. 12.

That is, on the left side of the three-dimensional shape data 181 in Fig. 12, an array indicated by vertex in the drawing of three-dimensional coordinates of vertexes constituting the surface of the subject is arranged, and on the right side of the three-dimensional shape data 181, an array indicated by face in the drawing of vertex numbers of triangles representing a graph structure of triangular patches is arranged.

That is, in the array on the left side of the three-dimensional shape data 181 in Fig. 12, the vertex numbers are denoted as 1, 2, 3, 4, ... from the top, and the coordinate positions are respectively denoted as $(x1, y1, z1)$, $(x2, y2, z2)$, $(x3, y3, z3)$, $(x4, y4, z4)$, ... from the top.

Furthermore, in the array on the right side of the three-dimensional shape data 181 in Fig. 12, $(2, 1, 3)$, $(2, 1, 4)$, ... are indicated from the top.

Thus, it is indicated that the triangular patch indicated by $(2, 1, 3)$ indicated in the array on the right side is constituted by three points of vertex numbers 2, 1, and 3, and respective coordinate positions of the vertices are $(x2, y2, z2)$, $(x1, y1, z1)$, and $(x3, y3, z3)$.

Furthermore, it is indicated that the triangular patch indicated by $(2, 1, 4)$ indicated in the array on the right side is constituted by three points of vertex numbers 2, 1, and 4, and respective coordinate positions of the vertices are $(x2, y2, z2)$, $(x1, y1, z1)$, and $(x4, y4, z4)$.

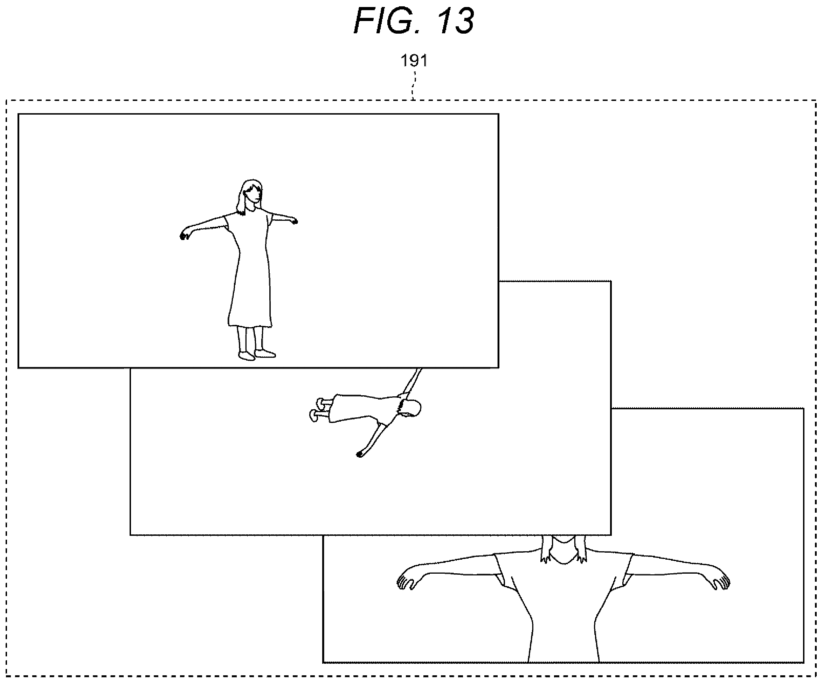

The color information texture data is, for example, as indicated by color information texture data 191 illustrated in Fig. 13, and basically includes a plurality of camera images captured by the plurality of cameras 121 illustrated in Fig. 8.

Note that, in the color information texture data 191 in Fig. 13, an example is illustrated in which a rectangular image including a woman who is the subject is clipped from each of three camera images obtained by imaging the woman corresponding to the subject in Fig. 11 from three different directions. Note that the camera images constituting the color information texture data 191 correspond to the number of cameras 121, and thus may be constituted by a number of camera images other than three.

Furthermore, although not illustrated, each of the plurality of camera images constituting the color information texture data 191 is subjected to lens distortion correction and color correction in the preceding stage, and is configured to correspond to the three-dimensional model by perspective projection conversion by camera parameters.

The camera parameter is a perspective projection parameter of the camera 121, and is expressed by, for example, a matrix as in the following expression (1).

[Math. 1]

$$
s \begin{bmatrix} P \\ Q \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}
$$

$$\cdots \ (1)$$

Here, X, Y, and Z are coordinate positions in a three-dimensional space based on three-dimensional shape data, r11 to r33 are rotation components of camera external parameters, t1 to t3 are movement components of camera external parameters, are camera internal parameters that can be expressed by fx, fy and cx, cy, P and Q are two-dimensional coordinates of a projection plane, and s is a depth.

That is, as indicated by Formula (1), the two-dimensional coordinates P and Q and the depth s of the projection plane are obtained by multiplying the matrix of the camera external parameters and the matrix of the camera internal parameters by the coordinates in the three-dimensional space based on the three-dimensional shape data as an input.

Note that one camera parameter is correspondingly input for one piece of color information texture.

The encoding unit 113 includes a depth map generation unit 171, a UV coordinate generation unit 172, a shape data compression processing unit 173, a color information packing unit 174, and a moving image data compression processing unit 175.

The depth map generation unit 171 generates a depth map (depth image) by projection for each camera on the basis of the three-dimensional shape data, and outputs the generated depth map to the UV coordinate generation unit 172.

The depth map is used for visibility check, which is processing of determining whether or not a point on the surface of the three-dimensional shape data appears in each camera.

The UV coordinate generation unit 172 generates, for each triangular patch, UV coordinates indicating from which position of the packing texture the color information should be acquired.

At this time, the UV coordinate generation unit 172 executes the visibility check and determines whether or not the distance between each triangular patch and the camera 121 matches the distance in the depth map, thereby determining whether or not the triangular patch appears in the camera image captured by the camera 121.

On the basis of the visibility check, the UV coordinate generation unit 172 determines which camera's color information is most suitable to use from among the cameras 121 in which it is determined that the triangular patch appears in the camera image on the basis of the camera priority, the projection area on the texture, and the like, and calculates the coordinate position of the triangular patch on the packing texture as UV coordinates on the basis of the determination result.

The UV coordinate generation unit 172 adds the calculated UV coordinate information by adding the data of UV coordinates corresponding to the array of UV coordinates and the vertices of the triangular patch to the three-dimensional shape data 181 in the same manner as the input three-dimensional shape data, and outputting the data to the shape data compression processing unit 173 as three-dimensional shape data with UV coordinates.

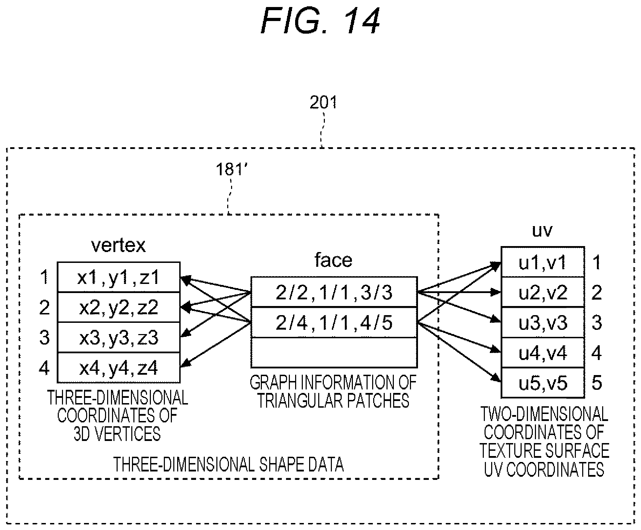

The three-dimensional shape data with UV coordinates has, for example, a data structure as illustrated in Fig. 14. That is, the three-dimensional shape data 201 with UV coordinates in Fig. 14 has a structure in which UV coordinates, which are two-dimensional coordinates of the packing texture surface indicated by uv, are added to the three-dimensional shape data 181' corresponding to the three-dimensional shape data 181 in Fig. 12.

Note that the three-dimensional shape data 181' of Fig. 14 is different from the three-dimensional shape data 181 of Fig. 12 in that the vertex numbers of the three-dimensional shape data of the array indicated by vertex and the vertex numbers on the texture surface of the array of UV coordinates indicated by uv are stored in the array indicating the graph structure of the triangular patch indicated by face.

That is, it is indicated that the triangular patch indicated by (2/2, 1/1, 3/3) in the array indicated by face at the center in Fig. 14 is constituted by three points of vertex numbers 2, 1, and 3 in the three-dimensional shape data, and respective coordinate positions of vertices are (x2, y2, z2), (x1, y1, z1), and (x3, y3, z3), and it is indicated that these three points correspond to three points of vertex numbers 2, 1, and 3 on the texture surface, and respective coordinate positions on the texture surface are (u2, v2), (u1, v1), and (u3, v3).

Furthermore, it is indicated that the triangular patch indicated by (2/4, 1/1, 4/5) indicated in the array on the right side is constituted by three points of vertex numbers 2, 1, and 4 in the three-dimensional shape data, and respective coordinate positions of the vertices are (x2, y2, z2), (x1, y1, z1), and (x4, y4, z4), and it is indicated that these three points correspond to three points of vertex numbers 4, 1, and 5 on the texture surface, and respective coordinate positions on the texture surface are (u4, v4), (u1, v1), and (u5, v5).

Note that the data format of the three-dimensional shape data 201 with UV coordinates illustrated in Fig. 14 is general as CG mesh data, and can be drawn with a general-purpose CG library.

The shape data compression processing unit 173 compresses the three-dimensional shape data with UV coordinates described with reference to Fig. 14 with a general-purpose mesh compression encoder and converts the three-dimensional shape data into a bit stream, and outputs the bit stream to the transmission unit 114.

The compression codec may be of any type as long as it can efficiently compress three-dimensional shape data with UV coordinates.

The color information packing unit 174 clips an area in which a subject appears from the camera 121 as a rectangular image, and arranges and packs the image on one texture surface to generate a packing texture.

Since the color information packing unit 174 arranges all the camera images on one texture surface, it is possible to represent the camera images by two-dimensional coordinates (u, v) on one texture surface, and as view independent rendering, color information can be drawn on a three-dimensional shape model by general UV map drawing.

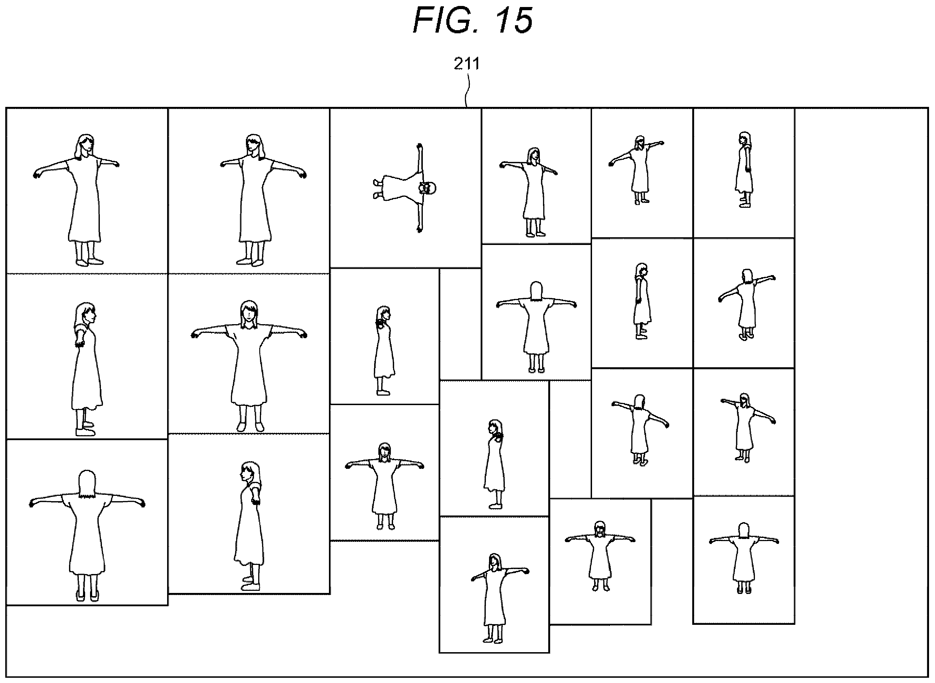

The packing texture is, for example, as illustrated in Fig. 15. In the packing texture 211 of Fig. 15, the female subject in Fig. 11 is clipped in rectangular shapes from camera images captured by the camera 121 in various line-of-sight directions, and is aligned to the left.

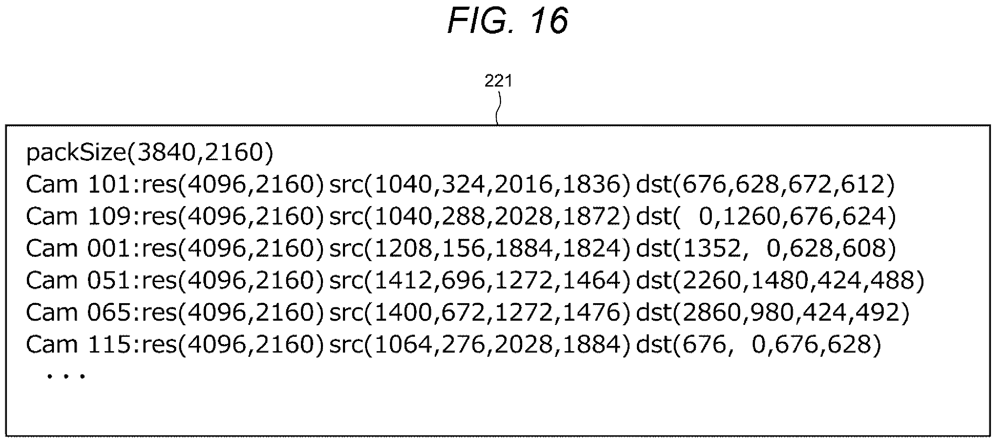

The positions of the images clipped in rectangular shapes in the packing texture 211 are specified by, for example, image arrangement information as illustrated in Fig. 16.

In image arrangement information 221 in Fig. 16, "packSize (3840, 2160)" is indicated in the uppermost row, and it is indicated that the resolution of the packing texture 211 is 3840 pixels ×2160 pixels.

In the second and subsequent stages, image arrangement information of each texture clipped in a rectangular shape is recorded.

More specifically, for example, in the second row, "Cam 101:res(4096, 2160) src(1040, 324, 2016, 1836) dst(676, 628, 672, 612)" is indicated from the left, indicating that the image is a rectangular image clipped from an image captured by the camera 121 identified by Cam 101, the resolution of the original image before clipping is 4096 pixels × 2160 pixels, the image is clipped in a rectangular shape from a range of a coordinate position (left end, top end, width, height) (= (1040, 324, 2016, 1836)) on the original image, and the image is pasted in a range of a coordinate position (676, 628, 672, 612) in the packing texture 211.

On the basis of the image arrangement information, a rectangular image clipped from the original image is enlarged or reduced and packed, whereby the packing texture 211 is formed.

The image arrangement information may be determined inside the color information packing unit 174, or may be designated from the outside as a predetermined arrangement.

On the basis of the image arrangement information, it is possible to restore the original color information texture coordinates of the camera 121 from the data in each rectangle, and it is possible to take correspondence between the three-dimensional shape data and the texture using the camera parameters.

The moving image data compression processing unit 175 encodes the packing texture 211 with the codec and outputs the encoded texture to the transmission unit 114. Since the packing texture 211 formed by pasting a plurality of rectangular camera images has a high correlation in the time direction, it can be efficiently compressed by a general-purpose moving image codec, and for example, a general format such as AVC or HEVC can be used.

Note that the texture used in the present disclosure is a perspective projection obtained by clipping a camera image, and the geometric correspondence with the triangular patch is a homography transformation that is also affected by the depth direction.

On the other hand, general texture pasting processing used in general UV map rendering is performed by Affine transformation without elements in the depth direction. Thus, even if the triangular patch on the camera image is pasted by aligning the positions of the three vertexes, the pattern inside the triangular patch strictly includes an error in the difference between the homography transformation and the Affine transformation.

However, in a general volumetric imaging condition, since the triangular patch is sufficiently small with respect to the imaging distance, the homography element that is reduced with increasing distance is very small. Therefore, even if processing is performed by the Affine transform used in general UV texture pasting instead of the homography transformation, an error due to this difference does not cause a problem.

<Visibility Check>

In a case of determining which is to be used as color information of a point on an object from among projection images of the plurality of cameras 121, it is necessary to determine whether or not the point of the object is visible from the projection point of the image, and this determination processing is visibility check.

Although the triangular patches of the three-dimensional shape model overlap on the projection plane, information actually recorded in the image as color information is the one closest to the projection point, and other than that, the color information is missing due to shielding.

The visibility check, which is a process of determining whether or not it is visible from the projection point, is determined on the basis of whether or not the depth of the point on the three-dimensional point matches a depth acquired from a depth map by creating the depth map which is depth information of the closest point.

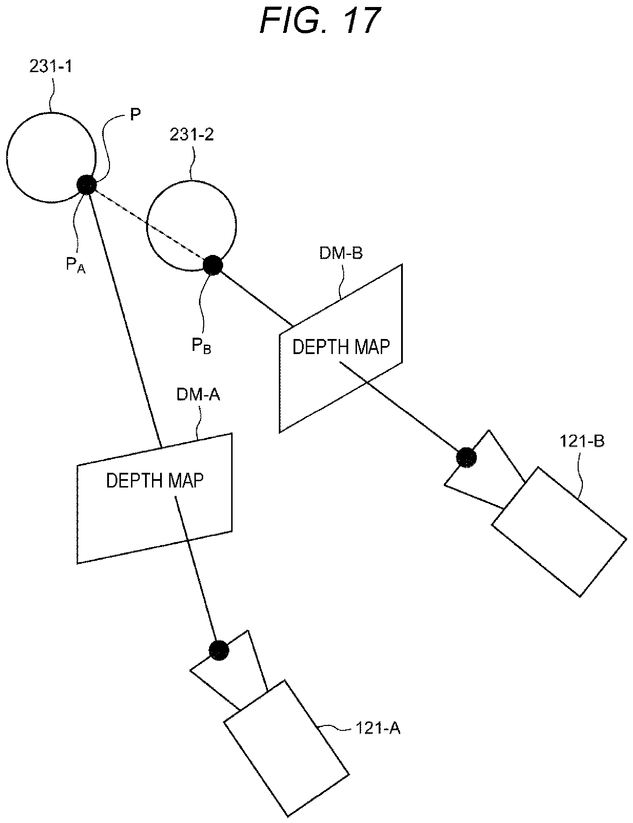

More specifically, for example, as illustrated in Fig. 17, a case will be considered in which the color information of the point P on an object 231-1 is determined using camera images (textures) captured by two cameras of cameras 121-A and 121-B having different viewpoint positions.

Note that, in Fig. 17, the camera 121-A captures the camera image from the viewpoint position at which the point P on the object 231-1 can be directly viewed, but the camera 121-B has an object 231-2 in front of the object 232-1 so as to hide the point P.

Furthermore, it is assumed that a depth map MD-A in the line-of-sight direction of the camera 121-A and a depth map MD-B in the line-of-sight direction of the camera 121-B are generated on the basis of the three-dimensional shape data.

In this case, an image in the direction of the point P on the object 231-1 on the camera image captured by the camera 121-A is a point PA on the object 231-1, and an image in the direction of the point P on the object 231-1 on the camera image captured by the camera 121-B is a point PB on the object 231-2.

Here, respective distances between the point P on the object 231-1 and the cameras 121-A and 121-B can be obtained on the basis of the three-dimensional shape data, and assuming that the respective distances are distances DA and DB, for example, a distance DPA at the point PA on a depth map DM-A coincides with the distance DA, but a distance DPB at the point PB on a depth map DM-B does not coincide with the distance DB.

That is, since the point P on the object 231-1 is directly visible from the camera 121-A, the distance DPA of the point PA on the depth map DM-A and the distance DA coincide with each other.

However, the point P on the object 231-1 is hidden by the object 231-2 from the camera 121-B, and the point PB on the object 231-2 is visible in the line-of-sight direction of the point P on the object 231-1, so that the distance DPB of the point PB on the depth map DM-B is different from the distance DB.

That is, since the point P on the object 231-1 is not visible on the camera image of the camera 121-B, only the image of the point PB on the object 231-2 is visible in the line-of-sight direction of the point P on the object 231-1 on the camera image of the camera 121-B, and the color of the point P on the object 231-1 cannot be reproduced using the color information on the camera image of the camera 121-B.

Therefore, in the rectangular images clipped from all the camera images by the visibility check, on the basis of the depth map corresponding to the corresponding camera 121, the UV coordinate generation unit 172 determines whether or not the image is a rectangular image that can be used to reproduce the color information by comparing a distance (the degree of depth, depth) between the point at which the color information is to be reproduced and the camera 121 and a distance (the degree of depth, depth) to the image projected in the line-of-sight direction to the point at which the color information is to be reproduced on the depth map based on the three-dimensional shape data, and uses the image for reproducing the color information only when the distances (the degrees of depth, depths) match.

Furthermore, in the visibility check described above, the UV coordinate generation unit 172 further obtains an inner product of the normal direction of the triangular patch and the imaging direction of the corresponding camera 121 in addition to matching the distance therebetween, and uses the inner product for reproduction of color information only when the inner product becomes larger than a predetermined value, that is, when both directions are similar.

That is, the inner product of the normal direction of the triangular patch and the imaging direction of the camera 121 is obtained, and the texture is used for the reproduction of the color information only when the inner product becomes larger than a predetermined value, that is, when both directions are similar and the projection area becomes larger than a predetermined value.

<Encoding Processing>

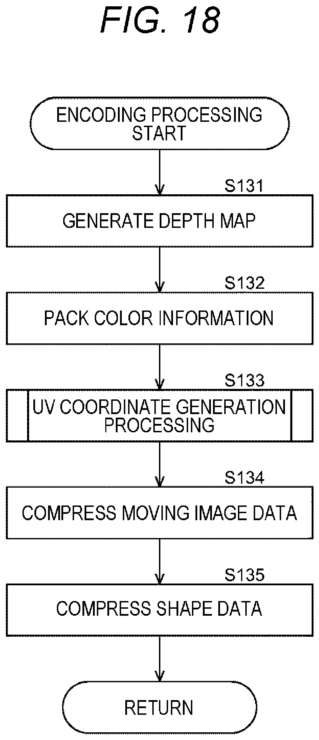

Next, encoding processing by the encoding unit 113 will be described with reference to a flowchart in Fig. 18.

In step S131, the depth map generation unit 171 generates a depth map in the image captured by each camera 121 on the basis of the three-dimensional shape data, and outputs the depth map to the UV coordinate generation unit 172.

In step S132, the color information packing unit 174 packs the texture obtained by extracting the area of the subject from the camera image as the color information on the basis of the color information texture data including the camera image captured by each camera 121 and the camera parameters, generates a packing texture, outputs the packing texture to the moving image data compression processing unit 175, and outputs the image arrangement information to the UV coordinate generation unit 172 and the transmission unit 114.

In step S133, the UV coordinate generation unit 172 executes UV coordinate generation processing, generates three-dimensional shape data with UV coordinates on the basis of the three-dimensional data, the depth map, the camera parameters, and the image arrangement information, and outputs the three-dimensional shape data with UV coordinates to the shape data compression processing unit 173.

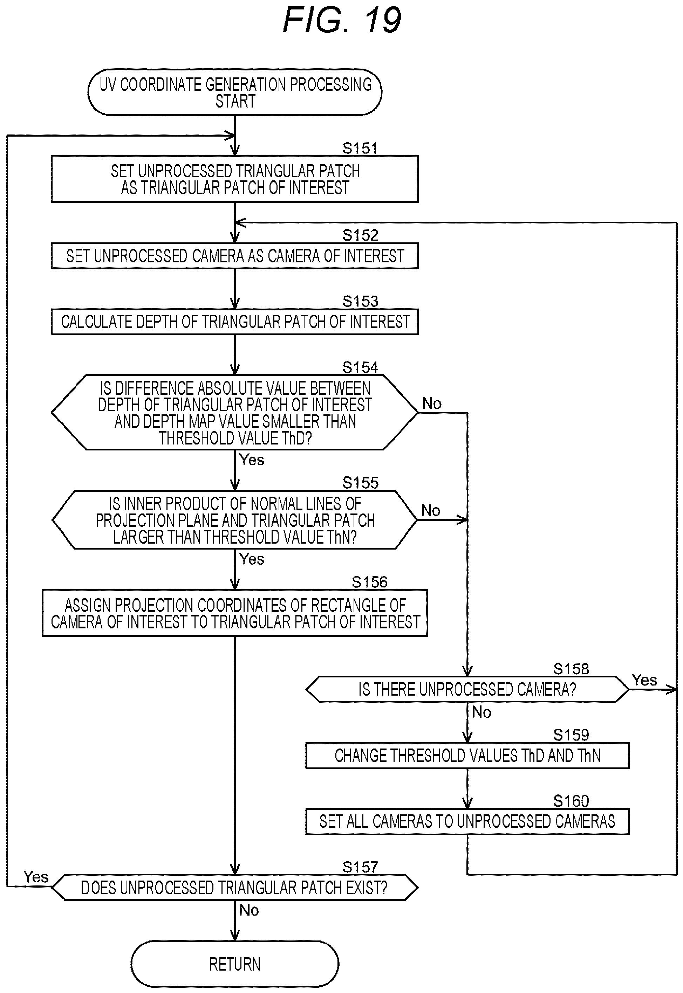

Note that the UV coordinate generation processing will be described later in detail with reference to the flowchart of Fig. 19.

In step S134, the moving image data compression processing unit 175 encodes the packing texture by the codec, and outputs the encoded packing texture to the transmission unit 114.

In step S135, the shape data compression processing unit 173 compresses the three-dimensional shape data with UV coordinates by a general-purpose mesh compression encoder and converts the three-dimensional shape data into a bit stream, and outputs the bit stream to the transmission unit 114.

<UV Coordinate Generation Processing>

Next, the UV coordinate generation processing by the UV coordinate generation unit 172 will be described with reference to a flowchart of Fig. 19.

In step S151, the UV coordinate generation unit 172 sets any of unprocessed triangular patches as a triangular patch of interest.

In step S152, the UV coordinate generation unit 172 sets one of the unprocessed cameras 121 as a camera 121 of interest.

In step S153, the UV coordinate generation unit 172 calculates the distance from the camera 121 of interest to the triangular patch of interest, that is, the depth on the basis of the three-dimensional shape data.

In step S154, the UV coordinate generation unit 172 determines whether or not a difference absolute value between a depth, which is the distance from the camera 121 of interest to the triangular patch of interest, and a depth in the triangular patch of interest on the depth map corresponding to a camera image of the camera 121 of interest is smaller than a threshold value ThD on the basis of the three-dimensional shape data.

That is, in step S154, the above-described visibility check process is performed depending on whether or not a difference absolute value between a depth value of the triangular patch of interest based on the three-dimensional shape data and a depth up to the triangular patch of interest read from the depth map is smaller than the threshold value ThD, and in a case where the difference absolute value is smaller than the threshold value ThD on the basis of the determination result, it is considered that the triangular patch of interest appears in the camera image and is valid, and the processing proceeds to step S155.

In step S155, the UV coordinate generation unit 172 determines whether a normal line of the triangular patch of interest is close to the imaging direction of the camera 121 of interest, that is, whether an inner product of the normal line of the triangular patch of interest and a normal line of a projection plane that is the imaging direction of the camera 121 of interest is larger than a threshold value ThN.

That is, in step S155, in a case where the inner product of the normal line of the triangular patch of interest and the normal line of the projection plane, which is the imaging direction of the camera 121 of interest, is larger than the threshold value ThN, the normal direction of the triangular patch of interest and the imaging direction of the camera 121 of interest are close to each other, and it can be regarded that the projection plane is larger than a predetermined value, the processing proceeds to step S156.

In step S156, the UV coordinate generation unit 172 assigns projection coordinates of the triangular patch of interest in the rectangular image of the camera 121 of interest as UV coordinates.

In step S157, the UV coordinate generation unit 172 determines whether or not an unprocessed triangular patch exists, and in a case where an unprocessed triangular patch exists, the processing returns to step S151, and the unprocessed triangular patch is sequentially set as the triangular patch of interest until there is no unprocessed triangular patch, and the subsequent processing is repeated.

Then, in a case where the processing is performed on all the triangular patches and it is determined in step S157 that there is no unprocessed triangular patch, the processing ends.

Furthermore, in a case where the difference absolute value between the depth of the triangular patch of interest based on the three-dimensional shape data and the depth read from the depth map is larger than the threshold value ThD in step S154, and the triangular patch of interest does not appear in the camera image and is regarded as invalid, or in a case where the inner product of the normal direction of the triangular patch of interest and the normal direction of the projection plane that is the imaging direction of the camera 121 of interest is smaller than the threshold value ThN in step S155, the normal direction of the triangular patch of interest is not close to the imaging direction of the camera 121 of interest, and the projection area cannot be regarded as larger than the predetermined value, the processing proceeds to step S158.

In step S158, the UV coordinate generation unit 172 determines whether or not an unprocessed camera 121 exists, and in a case where an unprocessed camera 121 exists, the processing returns to step S152, one of the unprocessed cameras 121 is set as a new camera 121 of interest, and the subsequent processing is repeated.

Furthermore, in step S158, in a case where there is no unprocessed camera 121, that is, in a case where all the cameras 121 are set as cameras of interest and the projection coordinates of the triangular patch of interest are not set in any of them, the processing proceeds to step S159.

In step S159, the UV coordinate generation unit 172 changes and resets the threshold values ThD and ThN. More specifically, the UV coordinate generation unit 172 resets the threshold value ThN by increasing the threshold value ThD by a predetermined value and decreasing the threshold value ThN by a predetermined value.

In step S160, the UV coordinate generation unit 172 resets all the cameras 121 to unprocessed cameras, and the processing returns to step S152.

That is, when no unprocessed camera 121 exists and the UV coordinate generation processing is performed on all the cameras 121 in step S158, since the UV coordinates to be the texture assigned to the triangular patch of interest are not assigned, the settings of the threshold values ThD and ThN are loosened by a predetermined value to change the direction to facilitate the assignment, and the processing is repeated again.

Finally, even if the depth is greatly deviated or the orientation of the triangular patch is greatly deviated, some coordinates of any camera image are allocated to all the triangular patches.

Through the above processing, the visibility check process is performed, and the projection coordinates of the triangular patch of interest in the rectangular image of the camera 121, which are regarded as being valid since the triangular patch of interest appears in the camera image and in which the normal line of the triangular patch of interest and the imaging direction of the attention camera 121 are regarded as being close, are assigned as the UV coordinates.

<Decoding Unit>

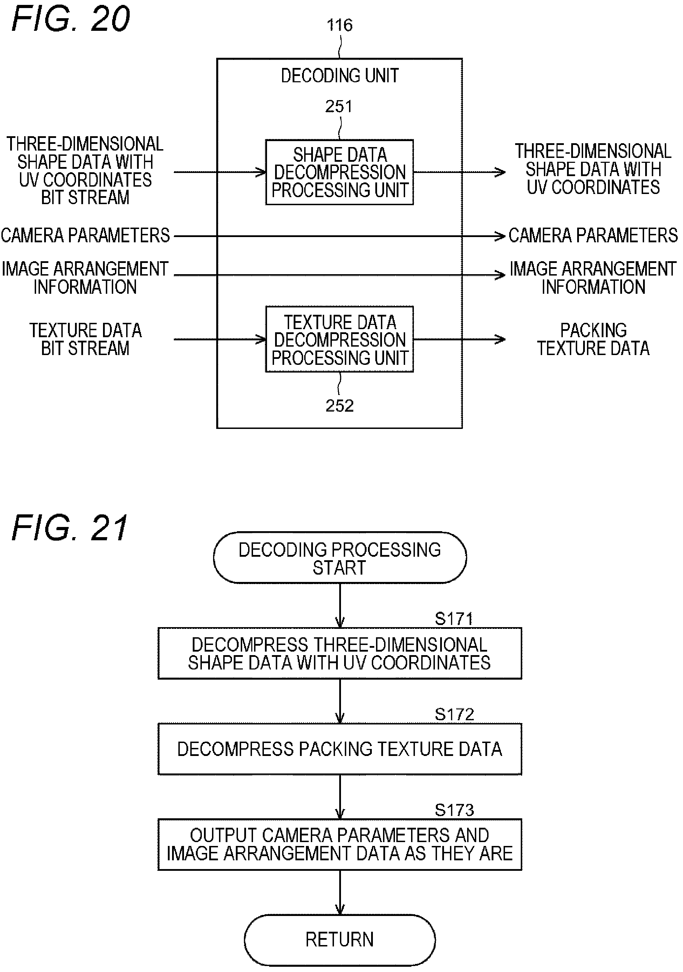

Next, a configuration example of the decoding unit 116 will be described with reference to Fig. 20.

The decoding unit 116 includes a shape data decompression processing unit 251 and a texture data decompression processing unit 252.

The shape data decompression processing unit 251 decodes the bit stream encoded by the shape data compression processing unit 173 of the encoding unit 113 and restores the original three-dimensional shape data with UV coordinates.

The texture data decompression processing unit 252 decodes the bit stream encoded by the moving image data compression processing unit 175 of the encoding unit 113, and restores the packing texture. The restored packing texture data is the packing texture 211 illustrated in Fig. 15.

The decoding unit 116 outputs the camera parameters and the image arrangement information together with the decoded three-dimensional shape data with UV coordinates and the packing texture data described above to the rendering unit 117 on the subsequent stage as they are.

<Decoding Processing>

Next, decoding processing by the decoding unit 116 will be described with reference to a flowchart in Fig. 21.

In step S171, the shape data decompression processing unit 251 decodes and decompresses the bit stream encoded by the shape data compression processing unit 173 of the encoding unit 113, and restores the original three-dimensional shape data with UV coordinates.

In step S172, the texture data decompression processing unit 252 decodes and decompresses the bit stream encoded by the moving image data compression processing unit 175 of the encoding unit 113, and restores the packing texture.

In step S173, the decoding unit 116 outputs the camera parameters and the image arrangement information together with the decoded three-dimensional shape data with UV coordinates and the packing texture data described above to the rendering unit 117 on the subsequent stage as they are.

By the above processing, the three-dimensional shape data and the packing texture data supplied as the bit stream are restored and supplied to the rendering unit 117 together with the camera parameters and the image arrangement information.

<Rendering Unit>

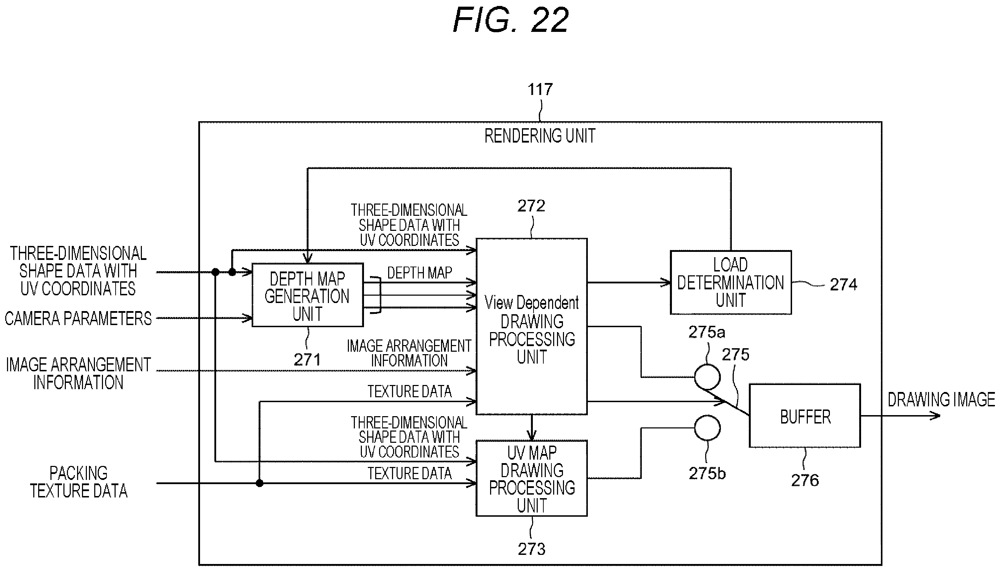

Next, a detailed configuration of the rendering unit 117 will be described with reference to Fig. 22.

The rendering unit 117 includes a depth map generation unit 271, a view dependent drawing processing unit, 272, a UV map drawing processing unit 273, a load determination unit 274, a switch 275, and a buffer 276.

The depth map generation unit 271 generates a depth map in the images captured by the N cameras 121 in the direction close to the drawing viewpoint on the basis of the three-dimensional shape data, and outputs the depth map to the view dependent drawing processing unit 272.

N, which is the number of cameras 121 in the direction close to the drawing viewpoint, is set by the load determination unit 274 according to the processing load of the view dependent drawing processing unit 272.

The view dependent drawing processing unit 272 executes the view dependent drawing processing described with reference to Fig. 3 on the basis of the three-dimensional shape data with UV coordinates, the depth map, the image arrangement information, and the packing texture data, and outputs a drawing result to the buffer 276 via a terminal 275a of the switch 275.

The UV map drawing processing unit 273 draws the pixel of interest by the UV map drawing processing, which is the view dependent drawing processing described with reference to Fig. 3, and outputs a drawing result to the buffer 276 via a terminal 275b of the switch 275.

The load determination unit 274 determines whether or not the processing load of the view dependent drawing processing unit 272 is in a state of being able to cope with real-time processing, and decreases N, which is the number of cameras 121 in the direction close to the drawing viewpoint, by a predetermined value when the processing load exceeds a predetermined threshold value ThA, which is an upper limit at which real-time processing can be considered to be impossible.

On the other hand, the load determination unit 274 increases N, which is the number of cameras 121 in the direction close to the drawing viewpoint, by a predetermined value when the processing load of the view dependent drawing processing unit 272 falls below a predetermined threshold value ThB, which is a lower limit that can be regarded as having a margin.

In a case where the switch 275 is controlled by the view dependent drawing processing unit 272 and connected to the terminal 275a, the view dependent drawing processing unit 272 outputs the pixel of interest drawn by the view dependent drawing processing to the buffer 276.

In a case where the switch 275 is connected to the terminal 275b, the UV map drawing processing unit 273 outputs the pixel of interest drawn by the UV map drawing processing, which is a view independent drawing processing, to the buffer 276.

The buffer 276 sequentially stores drawing results supplied via the switch 275, stores the drawing results for one frame, and then outputs the drawing results for one frame.

That is, the rendering unit 117 executes processing similar to the visibility check described above, draws the pixel of interest in view dependent drawing processing when the pixel of interest to be drawn can be regarded as appearing in a camera image captured by any of the N cameras, and draws the pixel of interest in UV map drawing processing that is view independent drawing processing when the pixel of interest to be drawn can be regarded as not appearing in any camera image.

More specifically, the view dependent drawing processing unit 272 executes processing similar to the visibility check described above for each of the camera images captured by the N cameras 121 in the direction close to the drawing viewpoint, and when there is a camera image in which the difference absolute value between the depth, which is the distance between the camera 121 based on the three-dimensional shape data and the pixel of interest to be drawn, and the depth of the pixel of interest in the depth map corresponding to the camera image is smaller than a predetermined value and there is a pixel of interest considered to appear in the camera image, the switch 275 is connected to the terminal 275a, and the pixel of interest is drawn by mixing so that a large weight is set to the color information of the camera image at a position close to the drawing viewpoint by the view dependent drawing processing by itself, and the pixel of interest is output and stored in the buffer 276.

On the other hand, when the difference absolute value between the depth, which is the distance between the camera 121 based on the three-dimensional shape data and the pixel of interest to be drawn, and the depth of the pixel of interest in the depth map corresponding to the camera image is larger than the predetermined value and there is no camera image in which the pixel of interest can be considered to appear in the camera image, the view dependent drawing processing unit 272 connects the switch 275 to the terminal 275b, and controls the UV map drawing processing unit 273 to draw the pixel of interest by the UV map drawing processing, which is a non-view independent drawing processing, and outputs a drawing result to the buffer 276 via the terminal 275b of the switch 275.

Note that the processing by the depth map generation unit 271 that generates the depth map used by the view dependent drawing processing unit 272 is processing of writing all triangular patches in the depth buffer by perspective projection, and it is necessary to perform this processing as many as the number of cameras 121 used for drawing, and the processing load is high.

Furthermore, since the view dependent drawing processing unit 272 determines the color value by performing weighted averaging at a mixing ratio suitable for the drawing viewpoint using the color information of the plurality of valid cameras 121, the processing load of the view dependent drawing processing unit 272 is also high.

On the other hand, in the processing by the UV map drawing processing unit 273, the color to draw can be determined only by accessing the packing texture with the UV coordinates obtained by internally interpolating the UV coordinates recorded for each vertex in the triangular patch, and the processing amount is small.

Furthermore, since the processing of the UV map drawing processing unit 273 is established as a general CG method, it is often prepared as a standard function of a drawing library, and is a drawing method that can be processed even by a reproduction device having a relatively low processing capability such as a mobile device.

In the present disclosure, the processing load can be adjusted by selecting view dependent drawing with a large processing amount when the reproduction device can perform the processing in real time and selecting UV map drawing with a light load when the processing capability is insufficient.

Furthermore, the reproduction processing on the reception side is often implemented by software, and in that case, it is desirable to operate on hardware having various processing capabilities with one program.

Moreover, the software also needs to perform various other processing in the background, and a function of adjusting the processing to be always dynamically performed in real time while viewing the load of the CPU or the GPU is necessary.

The rendering unit 117 can dynamically switch between the processing by the view dependent drawing processing unit 272 and the processing by the UV map drawing processing unit 273, and when the UV map drawing processing unit 273 is selected, the operation of the depth map generation unit 271 necessary for the processing can be stopped together with the view dependent drawing processing unit 272.

Since the rendering unit 117 can switch the operation in this manner, it is possible to greatly adjust the processing load. This adjustment can be finely controlled in several stages by increasing or decreasing the number of cameras 121 used in the view dependent drawing processing for each frame.

<Rendering Processing>

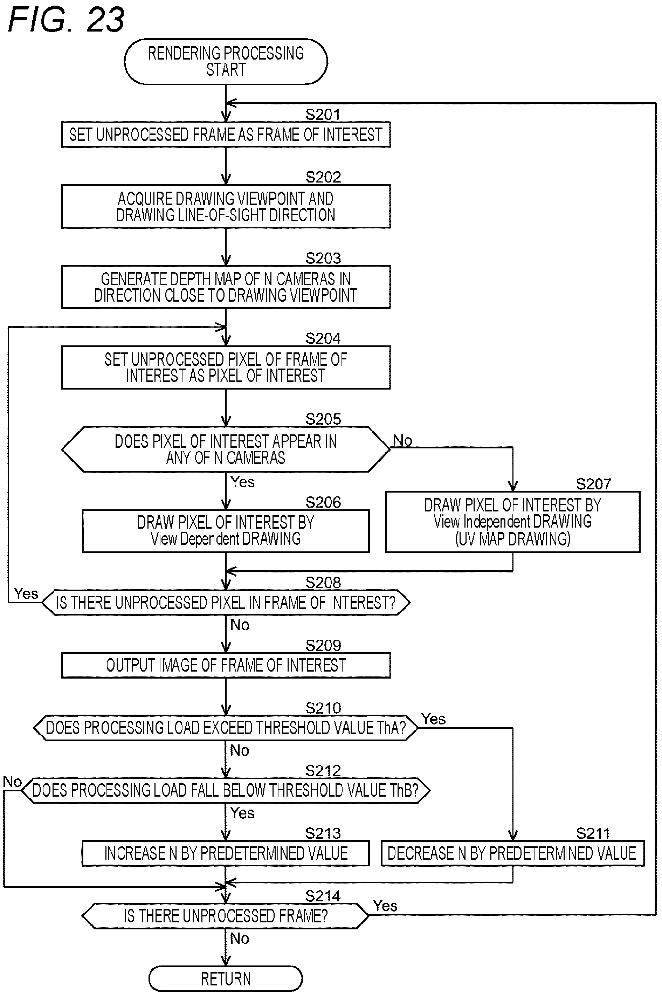

Next, the rendering processing by the rendering unit 117 in Fig. 22 will be described with reference to the flowchart in Fig. 23.

In step S201, the view dependent drawing processing unit 272 sets an unprocessed frame as a frame of interest.

In step S202, the depth map generation unit 271 and the view dependent drawing processing unit 272 acquire a drawing viewpoint and a drawing line-of-sight direction.

In step S203, the depth map generation unit 271 generates a depth map corresponding to the N camera images in the direction close to the drawing viewpoint on the basis of the three-dimensional shape data, and outputs the depth maps to the view dependent drawing processing unit 272.

In step S204, the view dependent drawing processing unit 272 sets any of unprocessed pixels of the frame of interest as the pixel of interest.

In step S205, the view dependent drawing processing unit 272 determines whether or not the pixel of interest appears in any of the N camera images by the visibility check.

In a case where it is determined in step S205 that the pixel of interest appears in any of the N camera images by the visibility check, the processing proceeds to step S206.

In step S206, the view dependent drawing processing unit 272 connects the switch 275 to the terminal 275a, performs mixing so that a large weight is set to the color information of the camera image at a position close to the drawing viewpoint by the view dependent drawing processing by itself, draws the pixel of interest, outputs the pixel of interest to the buffer 276 to have the pixel of interest stored.

On the other hand, in a case where it is determined in step S205 that the pixel of interest does not appear in any of the N camera images by the visibility check, the processing proceeds to step S207.

In step S207, the view dependent drawing processing unit 272 connects the switch 275 to the terminal 275b, and controls the UV map drawing processing unit 273 to draw the pixel of interest by the UV map drawing processing, which is a view independent drawing processing, and to output the drawing result to the buffer 276 via the terminal 275b of the switch 275.

In step S208, the view dependent drawing processing unit 272 determines whether or not there is an unprocessed pixel in the frame of interest, and in a case where there is an unprocessed pixel, the processing returns to step S204.

That is, the processing of steps S204 to S208 is repeated until all the pixels of the frame of interest are drawn.

Then, in a case where it is determined in step S208 that all the pixels of the frame of interest have been drawn and there is no unprocessed pixel, the processing proceeds to step S209.

In step S209, the buffer 276 outputs all the stored pixels of the frame of interest as a drawing image.

In step S210, the load determination unit 274 determines whether or not the processing load of the view dependent drawing processing unit 272 exceeds a predetermined threshold value ThA which is an upper limit at which real-time processing can be regarded as impossible.

In step S210, in a case where it is determined that the processing load of the view dependent drawing processing unit 272 exceeds a predetermined threshold value ThA which is an upper limit at which real-time processing can be regarded as impossible, the processing proceeds to step S211.

In step S211, the load determination unit 274 controls the view dependent drawing processing unit 272 to reduce N, which is the number of cameras 121 in the direction close to the drawing viewpoint, by a predetermined value, thereby reducing the processing load.

Furthermore, in step S210, in a case where it is determined that the processing load of the view dependent drawing processing unit 272 does not exceed the predetermined threshold value ThA which is the upper limit that can be regarded that the real-time processing is impossible, the processing proceeds to step S212.

In step S212, the load determination unit 274 determines whether or not the processing load of the view dependent drawing processing unit 272 has fallen below a predetermined lower limit threshold value ThB that can be regarded as having a margin.

In a case where it is determined in step S212 that the processing load of the view dependent drawing processing unit 272 has fallen below the predetermined lower limit threshold value ThB that can be regarded as having a margin, the processing proceeds to step S213.

In step S213, the load determination unit 274 controls the view dependent drawing processing unit 272 to increase N, which is the number of cameras 121 in the direction close to the drawing viewpoint, by a predetermined value, thereby increasing the processing load. Note that the increase of N does not need to be increased to the maximum value of the camera image extracted as the rectangular image in the packing texture, and for example, a limitation to a predetermined value may be applied.

Furthermore, in a case where it is determined in step S212 that the processing load of the view dependent drawing processing unit 272 is not below the predetermined lower limit threshold value ThB that can be regarded as having a margin, the processing of step S213 is skipped.

In step S214, the view dependent drawing processing unit 272 determines whether or not there is an unprocessed frame, and in a case where it is determined that there is an unprocessed frame, the processing returns to step S201, and the subsequent processes are repeated until there is no unprocessed frame.

Then, in a case where it is determined in step S214 that there is no unprocessed frame, the processing ends.

With such processing, for example, in a case where the processing performance of the reproduction device is sufficiently high, by generating a depth map of the number (N) of camera images in a direction close to a larger number of drawing viewpoints, there is a high possibility that a camera image in which the pixel of interest can be considered to appear can be found, so that it is possible to draw a large number of pixels by the view dependent drawing processing, and thus it is possible to implement highly accurate drawing.

Furthermore, for example, by adjusting the number (N) of camera images in the direction close to the drawing viewpoint according to the processing performance of the reproduction device, the processing load can be reduced by limiting the number of depth maps generated with a large processing load, and then the view dependent drawing processing can be implemented.

Moreover, in a case where the processing performance of the reproduction device is low, for example, since the number (N) of camera images in the direction close to the drawing viewpoint can be set to 0, the depth map generation processing can be substantially stopped by the depth map generation unit 271.

Furthermore, since the depth map is not generated in this manner, processing in which the camera image in which the pixel of interest appears does not exist is performed, and thus it is possible to perform the drawing of the pixel of interest by switching to the UV map drawing processing which is the view independent drawing processing. Thus, since the processing of the view dependent drawing processing unit 272 can also be stopped, it is possible to implement drawing of an appropriate virtual viewpoint image according to the processing performance of the reproduction device while reducing the processing load.

As a result, since it is possible to provide color information according to the processing performance of the reproduction device, it is possible to implement reproduction of an optimal virtual viewpoint image (free viewpoint image and volumetric image) in reproduction devices having various performances.

<<3. Example of Execution by Software>>

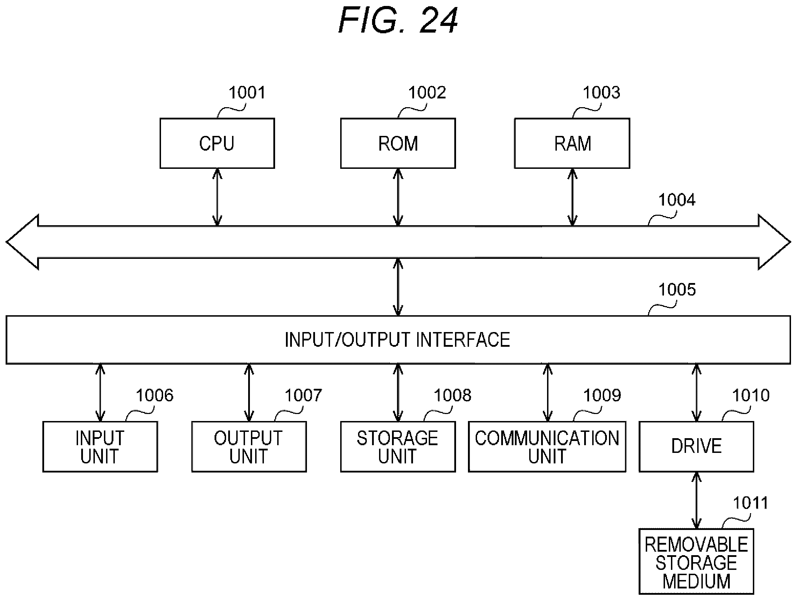

Fig. 24 is a block diagram illustrating a configuration example of the hardware of the computer that executes the series of processing described above in accordance with the program. In the general-purpose computer illustrated in Fig. 24, a CPU 1001, a ROM 1002, and a RAM 1003 are connected to one another via a bus 1004.

An input/output interface 1005 is also connected to the bus 1004. An input unit 1006, an output unit 1007, a storage unit 1008, a communication unit 1009, and a drive 1010 are connected to the input/output interface 1005.

The input unit 1006 includes, for example, a keyboard, a mouse, a microphone, a touch panel, an input terminal, and the like. The output unit 1007 includes, for example, a display, a speaker, an output terminal, and the like. The storage unit includes, for example, a hard disk, a RAM disk, a non-volatile memory, and the like. The communication unit 1009 includes, for example, a network interface. The drive 1010 drives a removable storage medium 1011 such as a magnetic disk, an optical disk, a magneto-optical disk, or a semiconductor memory.

In the computer configured as described above, for example, the CPU 1001 loads a program stored in the storage unit 1008 into the RAM 1002 via the input/output interface 1005 and the bus 1004 and executes the program to perform the above-described series of processing. Further, the RAM 1002 also appropriately stores data necessary for the CPU 1001 to perform various types of processing, and the like.

The program executed by the computer can be applied, for example, by being recorded in the removable storage medium 1011 as a package medium or the like. In that case, the program can be installed in the storage unit 1008 via the input/output interface 1005 by attaching the removable storage medium 1011 to the drive 1010.

Furthermore, the program can also be provided via a wired or wireless transmission medium such as a local area network, the Internet, or digital satellite broadcasting. In this case, the program can be received by the communication unit 1009 and installed in the storage unit 1008.

<<4. Application Examples>>

The technology according to the present disclosure can be applied to various products and services.

(4-1. Production of Content)

For example, new video content may be produced by combining the 3D model of a subject generated in the present embodiment with 3D data managed by another server. Furthermore, for example, in a case where there is background data acquired by a camera 121 such as Lidar, content as if the subject is at a place indicated by the background data can be produced by combining the 3D model of the subject generated in the present embodiment and the background data.

Note that the video content may be three-dimensional video content or two-dimensional video content converted into two dimensions. Note that examples of the 3D model of the subject generated in the present embodiment include a 3D model generated by the 3D model generation unit and a 3D model reconstructed by the rendering unit 117 (Fig. 7), and the like.

(4-2. Experience in Virtual Space)

For example, the subject (for example, a performer) generated in the present embodiment can be arranged in a virtual space that is a place where the user communicates as an avatar. In this case, the user has an avatar and can view a subject of a live image in the virtual space.

(4-3. Application to Communication with Remote Location)

For example, by transmitting the 3D model of the subject generated by the 3D model generation unit 112 (Fig. 7) from the transmission unit 114 (Fig. 7) to a remote place, a user at the remote place can view the 3D model of the subject through a reproduction device at the remote place. For example, by transmitting the 3D model of the subject in real time, the subject and the user at the remote location can communicate with each other in real time. For example, a case where the subject is a teacher and the user is a student, or a case where the subject is a physician and the user is a patient can be assumed.

(4-4. Others)

For example, a free viewpoint video of a sport or the like can be generated on the basis of the 3D models of the plurality of subjects generated in the present embodiment, or an individual can distribute himself/herself, which is a 3D model generated in the present embodiment, to a distribution platform. As described above, the contents in the embodiments described in the present description can be applied to various technologies and services.

Furthermore, for example, the above-described programs may be executed in any device. In this case, the device is only required to have a necessary functional block and obtain necessary information.

Further, for example, each step of one flowchart may be executed by one device, or may be shared and executed by a plurality of devices. Moreover, in a case where a plurality of pieces of processing is included in one step, the plurality of pieces of processing may be executed by one device, or may be shared and executed by a plurality of devices. In other words, the plurality of pieces of processing included in one step can also be executed as pieces of processing of a plurality of steps. Conversely, the processes described as a plurality of steps can also be collectively executed as a single step.

Furthermore, for example, in a program executed by the computer, processing of steps describing the program may be executed in a time-series order in the order described in the present specification, or may be executed in parallel or individually at a required timing such as when a call is made. That is, the pieces of processing of the respective steps may be executed in an order different from the above-described order as long as there is no contradiction. Moreover, this processing in steps describing program may be executed in parallel with processing of another program, or may be executed in combination with processing of another program.

Moreover, for example, a plurality of techniques related to the present disclosure can be each independently implemented alone as long as there is no contradiction. Of course, any plurality of the present disclosure can be implemented in combination. For example, some or all of the present disclosure described in any of the embodiments can be implemented in combination with some or all of the present disclosure described in other embodiments. Furthermore, some or all of the above-described arbitrary present disclosure can be implemented in combination with other techniques not described above.

Note that the present disclosure can also have the following configurations.

<1> An information processing system including:
a texture coordinate generation unit that generates three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on the basis of the three-dimensional shape data, a camera parameter, and color information texture data which are used when generating a virtual viewpoint image from the camera images, and adding information of the texture coordinates in association with the three-dimensional shape data.
<2> The information processing system according to <1>,

in which the three-dimensional shape data includes an array indicating correspondence between vertex coordinates of a mesh representing a surface shape of the subject in a three-dimensional space and vertices of a plurality of triangular patches when a surface of the subject is represented by the triangular patches,
the camera parameter is a parameter obtaining a coordinate position in a camera image captured by the cameras from a coordinate position in the three-dimensional space,
the color information texture data includes an image captured by the camera,
the information processing system further includes a packing unit that extracts and packs a rectangular region of the subject from the camera image and generates the packing texture, and
the texture coordinate generation unit generates the three-dimensional shape data with texture coordinates by setting coordinates on the packing texture corresponding to the vertices of the triangular patches as texture coordinates and adding information of the texture coordinates in association with the three-dimensional shape data.

<3> The information processing system according to <2>,
in which the texture coordinate generation unit sets, to the texture coordinates, coordinates on the packing texture appearing in the camera image among the coordinates on the packing texture corresponding to the vertices of the triangular patches.
<4> The information processing system according to <3>, further including

a depth map generation unit that generates a depth map corresponding to the camera image captured by each of the plurality of cameras on the basis of the three-dimensional shape data,
in which the texture coordinate generation unit assumes coordinates on the packing texture in which a distance difference, which is a difference between a distance between a vertex of the triangular patches and the camera based on the three-dimensional shape data and a distance at the vertex of the triangular patches on the depth map corresponding to the camera image, among coordinates on the packing texture corresponding to the vertex of the triangular patches is smaller than a predetermined difference threshold, as coordinates on the packing texture appearing in the camera image, and sets the coordinates to the texture coordinates.

<5> The information processing system according to <4>,
in which in a case where coordinates on the packing texture in which the distance difference is smaller than a predetermined difference threshold do not exist among the coordinates on the packing texture corresponding to the vertices of the triangular patches, the texture coordinate generation unit resets the predetermined difference threshold by increasing the predetermined difference threshold by a predetermined value, and assumes again coordinates on the packing texture in which the distance difference is smaller than the reset difference threshold among the coordinates on the packing texture corresponding to the vertices of the triangular patches as coordinates on the packing texture appearing in the camera image, and sets the coordinates to the texture coordinates.

<6> The information processing system according to <3>,
in which the texture coordinate generation unit sets, to the texture coordinates, coordinates on the packing texture appearing in the camera image among the coordinates on the packing texture corresponding to the vertices of the triangular patches, at which a normal direction of a corresponding triangular patch of the triangular patches and an imaging direction of the camera are similar to each other.

<7> The information processing system according to <6>,
in which the texture coordinate generation unit sets, to the texture coordinates as the coordinates at which the normal direction of the corresponding triangular patch and the imaging direction of the camera are similar to each other, coordinates on the packing texture appearing in the camera image among the coordinates on the packing texture corresponding to the vertices of the triangular patches, at which an inner product of the normal direction of the corresponding triangular patch and the imaging direction of the camera is larger than a predetermined inner product threshold value.

<8> The information processing system according to <7>,
in which in a case where there is no coordinates at which an inner product of the normal direction of the corresponding triangular patch and the imaging direction of the camera is larger than a predetermined inner product threshold value among the coordinates on the packing texture corresponding to the vertices of the triangular patches, the texture coordinate generation unit resets the predetermined inner product threshold value by reducing the predetermined inner product threshold value by a predetermined value, and sets again, to the texture coordinates, coordinates on the packing texture at which the inner product is larger than the reset inner product threshold value among the coordinates on the packing texture corresponding to the vertices of the triangular patches as coordinates at which the normal direction of the corresponding triangular patch and the imaging direction of the camera are similar to each other.

<9> The information processing system according to any one of <1> to <8>, further including:
a rendering unit that generates the virtual viewpoint image on the basis of the three-dimensional shape data with texture coordinates, the camera parameter, and the packing texture.

<10> The information processing system according to <9>, in which

the rendering unit includes

a view dependent drawing unit that draws a pixel of interest in the virtual viewpoint image by view dependent drawing, and
a view independent drawing unit that draws a pixel of interest in the virtual viewpoint image by view independent drawing, and

the virtual viewpoint image is drawn by drawing the pixel of interest by switching the view dependent drawing unit or the view independent drawing unit depending on whether or not the pixel of interest exists in the camera image captured by the camera close to a drawing viewpoint direction of the virtual viewpoint image.

<11> The information processing system according to <10>,

in which the rendering unit includes
a depth map generation unit that generates a depth map corresponding to camera images captured by N cameras close to the drawing viewpoint direction on the basis of the three-dimensional shape data with texture coordinates, and
the view dependent drawing unit determines whether or not the pixel of interest exists in the camera image captured by the camera close to the drawing viewpoint direction of the virtual viewpoint image on the basis of whether or not the camera image in which a distance difference formed by a difference absolute value between a distance between the camera and the pixel of interest based on the three-dimensional shape data with texture coordinates of the pixel of interest in the camera image and a distance at the pixel of interest in the depth map corresponding to the camera image is smaller than a predetermined difference threshold exists among the camera images of the N cameras.

<12> The information processing system according to <11>,

in which in a case where the camera image in which the distance difference is smaller than the predetermined difference threshold exists, the view dependent drawing unit determines that the pixel of interest exists in the camera image captured by the camera closer to the drawing viewpoint direction of the virtual viewpoint image, and in a case where the camera image in which the distance difference is smaller than the predetermined difference threshold does not exist, the view dependent drawing unit determines that the pixel of interest does not exist in the camera image captured by the camera closer to the drawing viewpoint direction of the virtual viewpoint image.

<13> The information processing system according to <10>,

in which in a case where the pixel of interest exists in the camera image captured by the camera close to the drawing viewpoint direction, the view dependent drawing unit draws the pixel of interest by the view dependent drawing unit itself by the view dependent drawing, and
in a case where the pixel of interest does not exist in the camera image captured by the camera close to the drawing viewpoint direction, the view dependent drawing unit controls the view independent drawing unit to draw the pixel of interest by the view independent drawing.

<14> The information processing system according to <11>,

in which the rendering unit includes
a processing load determination unit that determines a processing load by the view dependent drawing unit, and the processing load determination unit

decreases the N that is a number of the depth maps generated by the depth map generation unit by a predetermined value in a case where it is determined that the processing load of the view dependent drawing unit exceeds an upper limit value at which processing in real time is considered to be impossible, and increases the N that is the number of the depth maps generated by the depth map generation unit by a predetermined value in a case where it is determined that the processing load of the view dependent drawing unit falls below a lower limit value at which it is considered that there is a sufficient margin for the processing in real time.

<15> The information processing system according to <10>,
in which the view independent drawing is UV map drawing.
<16> An operation method of an information processing system, the operation method including:
generating three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on the basis of the three-dimensional shape data, a camera parameter, and color information texture data which are used when generating a virtual viewpoint image from the camera images, and adding information of the texture coordinates in association with the three-dimensional shape data.
<17> A program for causing a computer to function as
a texture coordinate generation unit that generates three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on the basis of the three-dimensional shape data, a camera parameter, and color information texture data which are used when generating a virtual viewpoint image from the plurality of camera images, and adding information of the texture coordinates in association with the three-dimensional shape data.

REFERENCE SIGNS LIST

| 101 | Information processing system |
| 111 | Data acquisition unit |

| 112 | 3D model generation unit |
|---|---|
| 113 | Encoding unit |
| 114 | Transmission unit |
| 115 | Reception unit |
| 116 | Decoding unit |
| 117, 117' | Rendering unit |
| 118 | Display unit |
| 121 and 121-1 to 121-n | Camera |
| 171 | Depth map generation unit |
| 172 | UV coordinate generation unit |
| 173 | Shape data compression processing unit |
| 174 | Color information packing unit |
| 175 | Moving image data compression processing unit |
| 251 | Shape data decompression processing unit |
| 252 | Texture data decompression processing unit |
| 271 | Depth map generation unit |
| 272 | View dependent drawing processing unit |
| 273 | UV map drawing processing unit |
| 274 | Load determination unit |
| 275 | Switch |
| 276 | Buffer |

**Claims**

1. An information processing system comprising:
   a texture coordinate generation unit that generates three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on a basis of the three-dimensional shape data, a camera parameter, and color information texture data which are used when generating a virtual viewpoint image from the camera images, and adding information of the texture coordinates in association with the three-dimensional shape data.

2. The information processing system according to claim 1,

   wherein the three-dimensional shape data includes an array indicating correspondence between vertex coordinates of a mesh representing a surface shape of the subject in a three-dimensional space and vertices of a plurality of triangular patches when a surface of the subject is represented by the triangular patches,
   the camera parameter is a parameter obtaining a coordinate position in a camera image captured by the cameras from a coordinate position in the three-dimensional space,
   the color information texture data includes an image captured by the camera,
   the information processing system further comprises a packing unit that extracts and packs a rectangular region of the subject from the camera image and generates the packing texture, and
   the texture coordinate generation unit generates the three-dimensional shape data with texture coordinates by setting coordinates on the packing texture corresponding to the vertices of the triangular patches as texture coordinates and adding information of the texture coordinates in association with the three-dimensional shape data.

3. The information processing system according to claim 2,
   wherein the texture coordinate generation unit sets, to the texture coordinates, coordinates on the packing texture appearing in the camera image among the coordinates on the packing texture corresponding to the vertices of the triangular patches.

4. The information processing system according to claim 3, further comprising:

   a depth map generation unit that generates a depth map corresponding to the camera image captured by each of the plurality of cameras on a basis of the three-dimensional shape data,
   wherein the texture coordinate generation unit assumes coordinates on the packing texture in which a distance difference, which is a difference between a distance between a vertex of the triangular patches and the camera based on the three-dimensional shape data and a distance at the vertex of the triangular patches on the depth map corresponding to the camera image, among coordinates on the packing texture corresponding to the vertex of the triangular patches is smaller than a predetermined difference threshold, as coordinates on the packing texture appearing in the camera image, and sets the coordinates to the texture coordinates.

5. The information processing system according to claim 4,
wherein in a case where coordinates on the packing texture in which the distance difference is smaller than a predetermined difference threshold do not exist among the coordinates on the packing texture corresponding to the vertices of the triangular patches, the texture coordinate generation unit resets the predetermined difference threshold by increasing the predetermined difference threshold by a predetermined value, and assumes again coordinates on the packing texture in which the distance difference is smaller than the reset difference threshold among the coordinates on the packing texture corresponding to the vertices of the triangular patches as coordinates on the packing texture appearing in the camera image, and sets the coordinates to the texture coordinates.

6. The information processing system according to claim 3,
wherein the texture coordinate generation unit sets, to the texture coordinates, coordinates on the packing texture appearing in the camera image among the coordinates on the packing texture corresponding to the vertices of the triangular patches, at which a normal direction of a corresponding triangular patch of the triangular patches and an imaging direction of the camera are similar to each other.

7. The information processing system according to claim 6,
wherein the texture coordinate generation unit sets, to the texture coordinates as the coordinates at which the normal direction of the corresponding triangular patch and the imaging direction of the camera are similar to each other, coordinates on the packing texture appearing in the camera image among the coordinates on the packing texture corresponding to the vertices of the triangular patches, at which an inner product of the normal direction of the corresponding triangular patch and the imaging direction of the camera is larger than a predetermined inner product threshold value.

8. The information processing system according to claim 7,
wherein in a case where there is no coordinates at which an inner product of the normal direction of the corresponding triangular patch and the imaging direction of the camera is larger than a predetermined inner product threshold value among the coordinates on the packing texture corresponding to the vertices of the triangular patches, the texture coordinate generation unit resets the predetermined inner product threshold value by reducing the predetermined inner product threshold value by a predetermined value, and sets again, to the texture coordinates, coordinates on the packing texture at which the inner product is larger than the reset inner product threshold value among the coordinates on the packing texture corresponding to the vertices of the triangular patches as coordinates at which the normal direction of the corresponding triangular patch and the imaging direction of the camera are similar to each other.

9. The information processing system according to claim 1, further comprising:
a rendering unit that generates the virtual viewpoint image on a basis of the three-dimensional shape data with texture coordinates, the camera parameter, and the packing texture.

10. The information processing system according to claim 9,

wherein the rendering unit includes:

a view dependent drawing unit that draws a pixel of interest in the virtual viewpoint image by view dependent drawing; and
a view independent drawing unit that draws a pixel of interest in the virtual viewpoint image by view independent drawing, and

the virtual viewpoint image is drawn by drawing the pixel of interest by switching the view dependent drawing unit or the view independent drawing unit depending on whether or not the pixel of interest exists in the camera image captured by the camera close to a drawing viewpoint direction of the virtual viewpoint image.

11. The information processing system according to claim 10,

wherein the rendering unit includes

a depth map generation unit that generates a depth map corresponding to camera images captured by N cameras close to the drawing viewpoint direction on a basis of the three-dimensional shape data with texture coordinates, and

the view dependent drawing unit determines whether or not the pixel of interest exists in the camera image captured by the camera close to the drawing viewpoint direction of the virtual viewpoint image on a basis of whether or not the camera image in which a distance difference formed by a difference absolute value between a distance between the camera and the pixel of interest based on the three-dimensional shape data with texture coordinates of the pixel of interest in the camera image and a distance at the pixel of interest in the depth map corresponding to the camera image is smaller than a predetermined difference threshold exists among the camera images of the N cameras.

12. The information processing system according to claim 11,

wherein in a case where the camera image in which the distance difference is smaller than the predetermined difference threshold exists, the view dependent drawing unit determines that the pixel of interest exists in the camera image captured by the camera closer to the drawing viewpoint direction of the virtual viewpoint image, and in a case where the camera image in which the distance difference is smaller than the predetermined difference threshold does not exist, the view dependent drawing unit determines that the pixel of interest does not exist in the camera image captured by the camera closer to the drawing viewpoint direction of the virtual viewpoint image.

13. The information processing system according to claim 10,

wherein in a case where the pixel of interest exists in the camera image captured by the camera close to the drawing viewpoint direction, the view dependent drawing unit draws the pixel of interest by the view dependent drawing unit itself by the view dependent drawing, and in a case where the pixel of interest does not exist in the camera image captured by the camera close to the drawing viewpoint direction, the view dependent drawing unit controls the view independent drawing unit to draw the pixel of interest by the view independent drawing.

14. The information processing system according to claim 11,

wherein the rendering unit includes
a processing load determination unit that determines a processing load by the view dependent drawing unit, and the processing load determination unit

decreases the N that is a number of the depth maps generated by the depth map generation unit by a predetermined value in a case where it is determined that the processing load of the view dependent drawing unit exceeds an upper limit value at which processing in real time is considered to be impossible, and increases the N that is the number of the depth maps generated by the depth map generation unit by a predetermined value in a case where it is determined that the processing load of the view dependent drawing unit falls below a lower limit value at which it is considered that there is a sufficient margin for the processing in real time.

15. The information processing system according to claim 10,
wherein the view independent drawing is UV map drawing.

16. An operation method of an information processing system, the operation method comprising:
generating three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on a basis of the three-dimensional shape data, a camera parameter, and color information texture data which are used when generating a virtual viewpoint image from the camera images, and adding information of the texture coordinates in association with the three-dimensional shape data.

17. A program for causing a computer to function as:
a texture coordinate generation unit that generates three-dimensional shape data with texture coordinates by imaging a subject with a plurality of cameras, setting coordinates on a packing texture generated from a plurality of camera images captured by the plurality of cameras corresponding to the three-dimensional shape data as texture coordinates on a basis of the three-dimensional shape data, a camera parameter, and color information texture data which are used when generating a virtual viewpoint image from the plurality of camera images, and adding information of the texture coordinates in association with the three-dimensional shape data.

# FIG. 1

# FIG. 2

Video

Video

Video
51

→

THREE-
DIMENSIONAL
DATA
52

→

VIRTUAL
VIEWPOINT
IMAGE
53

# FIG. 3

| View Independent | View Dependent |
|---|---|
| BASED ON VERTEX | BASED ON VERTEX |

View Independent, BASED ON VERTEX:

32
P
cam0  cam1  cam2
① VERTEX IS COLORED

32
Pi
VC
② COLORED MODEL IS DRAWN FROM VIRTUAL VIEWPOINT

View Dependent, BASED ON VERTEX:

32
P
cam0  cam1  cam2
VC
① VERTEX IS COLORED (IN CONSIDERATION OF VIRTUAL VIWPOINT)

32
Pd
VC
② COLORED MODEL IS DRAWN FROM VIRTUAL VIEWPOINT

## FIG. 4

VDDS

View Dependent DRAWING

THREE-DIMENSIONAL SHAPE DATA

vertex

face

$$s \begin{bmatrix} P \\ Q \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}$$

vertex: 1  x,y,z
2
3
4

THREE-DIMENSIONAL COORDINATES OF 3D VERTEX

face: 2,1,3
2,1,4

GRAPH INFORMATION OF TRIANGULAR PATCHES

packSize(3840,2160)
Cam 101:res(4096,2160)src(1040,324,2016,1836)dst(676,628,672,612)
Cam 109:res(4096,2160)src(1040,288,2028,1872)dst( 0,1260,676,624)
Cam 001:res(4096,2160)src(1208,156,1884,1824)dst(1352, 0,628,608)
Cam 051:res(4096,2160)src(1412,696,1272,1464)dst(2260,1480,424,488)
Cam 065:res(4096,2160)src(1400,672,1272,1476)dst(2860,980,424,492)
Cam 115:res(4096,2160)src(1064,276,2028,1884)dst(676, 0,676,628)
. . .

CAMERA PARAMETER + RECTANGULAR ARRANGEMENT INFORMATION

PACKING TEXTURE

71

72

73

EP 4 586 206 A1

## FIG. 5

VIDS

View Independent DRAWING

vertex

| | x,y,z |
|---|---|
| 1 | |
| 2 | |
| 3 | |
| 4 | |

THREE-DIMENSIONAL
COORDINATES OF
3D VERTEX

face

| 2/2,1/1,3/3 |
|---|
| 2/4,1/1,4/5 |

GRAPH INFORMATION OF
TRIANGULAR PATCHES

uv

| | u,v |
|---|---|
| 1 | |
| 2 | |
| 3 | |
| 4 | |
| 5 | |

TWO-DIMENSIONAL
COORDINATES OF
TEXTURE SURFACE

THREE-DIMENSIONAL SHAPE DATA

UV COORDINATES

UV TEXTURE

81

82

EP 4 586 206 A1

# FIG. 6

VDP

DS

$$s \begin{bmatrix} P \\ Q \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}$$

72

```
packSize(3840,2160)
Cam 101:res(4096,2160)src(1040,324,2016,1836)dst(676,628,672,612)
Cam 109:res(4096,2160)src(1040,288,2028,1872)dst( 0,1260,676,624)
Cam 001:res(4096,2160)src(1208,156,1884,1824)dst(1352, 0,628,608)
Cam 051:res(4096,2160)src(1412,696,1272,1464)dst(2260,1480,424,488)
Cam 065:res(4096,2160)src(1400,672,1272,1476)dst(2860,980,424,492)
Cam 115:res(4096,2160)src(1064,276,2028,1884)dst(676, 0,676,628)
    . . .
```

81    VIP

vertex

uv

| | x,y,z |
|---|---|
| 1 | |
| 2 | |
| 3 | |
| 4 | |

face

| 2/2,1/1,3/3 |
|---|
| 2/4,1/1,4/5 |

GRAPH INFORMATION OF
TRIANGULAR PATCHES

THREE-DIMENSIONAL
COORDINATES OF
3D VERTEX

| u,v | |
|---|---|
| | 1 |
| | 2 |
| | 3 |
| | 4 |
| | 5 |

TWO-DIMENSIONAL
COORDINATES OF
TEXTURE SURFACE
UV COORDINATES

THREE-DIMENSIONAL SHAPE DATA

71

73

## FIG. 7

# FIG. 8

# FIG. 9

```
┌─────────────────────────────────────────┐
│ VIRTUAL VIEWPOINT IMAGE DISPLAY PROCESSING │
│                 START                      │
└─────────────────────────────────────────┘
                    │
                    ▼           S101
        ┌───────────────────────────┐
        │       ACQUIRE DATA         │
        └───────────────────────────┘
                    │
                    ▼           S102
        ┌───────────────────────────┐
        │      GENERATE 3D MODEL      │
        └───────────────────────────┘
                    │
                    ▼           S103
        ┌───────────────────────────┐
        │     ENCODING PROCESSING     │
        └───────────────────────────┘
                    │
                    ▼           S104
        ┌───────────────────────────┐
        │        TRANSMISSION         │
        └───────────────────────────┘
                    │
                    ▼           S105
        ┌───────────────────────────┐
        │         RECEPTION           │
        └───────────────────────────┘
                    │
                    ▼           S106
        ┌───────────────────────────┐
        │     DECODING PROCESSING     │
        └───────────────────────────┘
                    │
                    ▼           S107
        ┌───────────────────────────┐
        │     RENDERING PROCESSING    │
        └───────────────────────────┘
                    │
                    ▼           S108
        ┌───────────────────────────┐
        │       DISPLAY CONTROL       │
        └───────────────────────────┘
                    │
                    ▼
              ┌───────────┐
              │    END     │
              └───────────┘
```

# FIG. 10

## FIG. 11

P1

## FIG. 12

181

vertex

| | |
|---|---|
| 1 | x1, y1, z1 |
| 2 | x2, y2, z2 |
| 3 | x3, y3, z3 |
| 4 | x4, y4, z4 |

THREE-DIMENSIONAL
COORDINATES OF
3D VERTICES

face

| |
|---|
| 2, 1, 3 |
| 2, 1, 4 |
| |

GRAPH INFORMATION OF
TRIANGULAR PATCHES

THREE-DIMENSIONAL SHAPE DATA

FIG. 13

# FIG. 14

201

181'

vertex

| | |
|---|---|
| 1 | x1,y1,z1 |
| 2 | x2,y2,z2 |
| 3 | x3,y3,z3 |
| 4 | x4,y4,z4 |

THREE-DIMENSIONAL
COORDINATES OF
3D VERTICES

face

| |
|---|
| 2/2,1/1,3/3 |
| 2/4,1/1,4/5 |
| |

GRAPH INFORMATION OF
TRIANGULAR PATCHES

uv

| | |
|---|---|
| u1,v1 | 1 |
| u2,v2 | 2 |
| u3,v3 | 3 |
| u4,v4 | 4 |
| u5,v5 | 5 |

TWO-DIMENSIONAL
COORDINATES OF
TEXTURE SURFACE
UV COORDINATES

THREE-DIMENSIONAL SHAPE DATA

FIG. 15

FIG. 16

221

```
packSize(3840,2160)
Cam 101:res(4096,2160) src(1040,324,2016,1836) dst(676,628,672,612)
Cam 109:res(4096,2160) src(1040,288,2028,1872) dst(  0,1260,676,624)
Cam 001:res(4096,2160) src(1208,156,1884,1824) dst(1352,  0,628,608)
Cam 051:res(4096,2160) src(1412,696,1272,1464) dst(2260,1480,424,488)
Cam 065:res(4096,2160) src(1400,672,1272,1476) dst(2860,980,424,492)
Cam 115:res(4096,2160) src(1064,276,2028,1884) dst(676,  0,676,628)
   ...
```

EP 4 586 206 A1

## FIG. 17

231-1

P

231-2

P_A

P_B

DM-B

DEPTH MAP

DM-A

DEPTH MAP

121-B

121-A

# FIG. 18

```
      ENCODING PROCESSING
            START

              │  S131
              ▼
      GENERATE DEPTH MAP

              │  S132
              ▼
      PACK COLOR INFORMATION

              │  S133
              ▼
    UV COORDINATE GENERATION
            PROCESSING

              │  S134
              ▼
    COMPRESS MOVING IMAGE DATA

              │  S135
              ▼
      COMPRESS SHAPE DATA

              │
              ▼
           RETURN
```

## FIG. 19

UV COORDINATE GENERATION PROCESSING START

S151
SET UNPROCESSED TRIANGULAR PATCH AS TRIANGULAR PATCH OF INTEREST

S152
SET UNPROCESSED CAMERA AS CAMERA OF INTEREST

S153
CALCULATE DEPTH OF TRIANGULAR PATCH OF INTEREST

S154
IS DIFFERENCE ABSOLUTE VALUE BETWEEN DEPTH OF TRIANGULAR PATCH OF INTEREST AND DEPTH MAP VALUE SMALLER THAN THRESHOLD VALUE ThD? — No

Yes

S155
IS INNER PRODUCT OF NORMAL LINES OF PROJECTION PLANE AND TRIANGULAR PATCH LARGER THAN THRESHOLD VALUE ThN? — No

Yes

S156
ASSIGN PROJECTION COORDINATES OF RECTANGLE OF CAMERA OF INTEREST TO TRIANGULAR PATCH OF INTEREST

S158
IS THERE UNPROCESSED CAMERA? — Yes

No

S159
CHANGE THRESHOLD VALUES ThD AND ThN

S160
SET ALL CAMERAS TO UNPROCESSED CAMERAS

S157
Yes — DOES UNPROCESSED TRIANGULAR PATCH EXIST?

No

RETURN

## FIG. 20

116

DECODING UNIT

251

THREE-DIMENSIONAL SHAPE DATA WITH UV COORDINATES BIT STREAM → SHAPE DATA DECOMPRESSION PROCESSING UNIT → THREE-DIMENSIONAL SHAPE DATA WITH UV COORDINATES

CAMERA PARAMETERS → CAMERA PARAMETERS

IMAGE ARRANGEMENT INFORMATION → IMAGE ARRANGEMENT INFORMATION

TEXTURE DATA BIT STREAM → TEXTURE DATA DECOMPRESSION PROCESSING UNIT → PACKING TEXTURE DATA

252

## FIG. 21

DECODING PROCESSING START

S171
DECOMPRESS THREE-DIMENSIONAL SHAPE DATA WITH UV COORDINATES

S172
DECOMPRESS PACKING TEXTURE DATA

S173
OUTPUT CAMERA PARAMETERS AND IMAGE ARRANGEMENT DATA AS THEY ARE

RETURN

## FIG. 22

EP 4 586 206 A1

# FIG. 23

```
                    ┌─────────────────────────┐
                    │   RENDERING PROCESSING   │
                    │          START           │
                    └─────────────────────────┘
                                │
                                ▼                          S201
        ┌──────────────────────────────────────────────┐
        │  SET UNPROCESSED FRAME AS FRAME OF INTEREST    │
        └──────────────────────────────────────────────┘
                                │
                                ▼                          S202
        ┌──────────────────────────────────────────────┐
        │      ACQUIRE DRAWING VIEWPOINT AND             │
        │    DRAWING LINE-OF-SIGHT DIRECTION             │
        └──────────────────────────────────────────────┘
                                │
                                ▼                          S203
        ┌──────────────────────────────────────────────┐
        │   GENERATE DEPTH MAP OF N CAMERAS IN           │
        │  DIRECTION CLOSE TO DRAWING VIEWPOINT          │
        └──────────────────────────────────────────────┘
                                │
                                ▼                          S204
        ┌──────────────────────────────────────────────┐
        │    SET UNPROCESSED PIXEL OF FRAME OF           │
        │      INTEREST AS PIXEL OF INTEREST             │
        └──────────────────────────────────────────────┘
                                │
                                ▼                          S205
              DOES PIXEL OF INTEREST APPEAR IN       No
              ANY OF N CAMERAS    ───────────────────────────┐
                                │ Yes                         │
                                ▼          S206               ▼          S207
        ┌──────────────────────────────┐   ┌──────────────────────────────┐
        │    DRAW PIXEL OF INTEREST BY │   │   DRAW PIXEL OF INTEREST BY   │
        │   View Dependent DRAWING     │   │  View Independent DRAWING     │
        │                              │   │      (UV MAP DRAWING)         │
        └──────────────────────────────┘   └──────────────────────────────┘
                                │                    │
                                ▼◄───────────────────┘       S208
        Yes  IS THERE UNPROCESSED PIXEL IN FRAME OF INTEREST?
                                │ No
                                ▼                          S209
        ┌──────────────────────────────────────────────┐
        │      OUTPUT IMAGE OF FRAME OF INTEREST         │
        └──────────────────────────────────────────────┘
                                │
                                ▼                          S210
         DOES PROCESSING LOAD EXCEED THRESHOLD VALUE ThA?   Yes
                                │ No                           │
                                ▼                 S212         │
      No  DOES PROCESSING LOAD FALL BELOW THRESHOLD VALUE ThB? │
                                │ Yes                          │
                                ▼          S213                ▼          S211
        ┌──────────────────────────────┐   ┌──────────────────────────────┐
        │ INCREASE N BY PREDETERMINED   │   │ DECREASE N BY PREDETERMINED   │
        │           VALUE              │   │           VALUE               │
        └──────────────────────────────┘   └──────────────────────────────┘
                                │◄───────────────────┘
                                ▼                          S214
              IS THERE UNPROCESSED FRAME?              Yes
                                │ No
                                ▼
                    ┌─────────────────────────┐
                    │         RETURN           │
                    └─────────────────────────┘
```

# FIG. 24

```
            1001              1002              1003
          ┌───────┐        ┌───────┐        ┌───────┐
          │  CPU  │        │  ROM  │        │  RAM  │
          └───┬───┘        └───┬───┘        └───┬───┘
                                                        1004
    ◄═══════════════════════════════════════════════════►
                              │
                                                        1005
    ┌─────────────────────────────────────────────────────┐
    │              INPUT/OUTPUT INTERFACE                   │
    └──┬────────┬────────┬──────────────┬────────┬─────────┘
       │        │        │              │        │
     1006     1007     1008           1009     1010
  ┌───────┐ ┌───────┐ ┌───────┐ ┌──────────────┐ ┌───────┐
  │ INPUT │ │OUTPUT │ │STORAGE│ │COMMUNICATION │ │ DRIVE │
  │ UNIT  │ │ UNIT  │ │ UNIT  │ │    UNIT      │ │       │
  └───────┘ └───────┘ └───────┘ └──────────────┘ └───┬───┘
                                                       │  1011
                                                 ┌──────────┐
                                                 │REMOVABLE │
                                                 │ STORAGE  │
                                                 │ MEDIUM   │
                                                 └──────────┘
```

## INTERNATIONAL SEARCH REPORT

| International application No. |
| --- |
| **PCT/JP2023/029936** |

| A. | CLASSIFICATION OF SUBJECT MATTER |
| --- | --- |

*G06T 19/00*(2011.01)i; *G06T 15/04*(2011.01)i
FI:   G06T19/00 A; G06T15/04

According to International Patent Classification (IPC) or to both national classification and IPC

| B. | FIELDS SEARCHED |
| --- | --- |

Minimum documentation searched (classification system followed by classification symbols)

G06T19/00; G06T15/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-513703 A (SONY CORP.) 14 May 2020 (2020-05-14) paragraphs [0011]-[0054], fig. 1-7 | 1, 9, 16-17 |
| A | WO 2020/067441 A1 (SHARP CORP.) 02 April 2020 (2020-04-02) entire text, all drawings | 1-17 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 October 2023** | **17 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/029936**

| Patent document cited in search report | | | Publication date (day/month/year) | Patent family member(s) | | | Publication date (day/month/year) |
|---|---|---|---|---|---|---|---|
| JP | 2020-513703 | A | 14 May 2020 | US paragraphs [0019]-[0062], fig. 1-7<br>KR<br>CN | 2018/0152688<br>10-2019-0068622<br>109997358 | A1<br>A<br>A | |
| WO | 2020/067441 | A1 | 02 April 2020 | US entire text, all drawings<br>CN | 2021/0398352<br>112771867 | A1<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018150933 A1